# DEMANDE DE BREVET EUROPEEN

(11) **EP 4 277 044 A1**
(43) Date de publication de la demande: **15.11.2023**
(21) Numéro de dépôt: 23171821.4
(22) Date de dépôt: 05.05.2023
(51) Int. Cl.: H01R 13/627, H02B 1/20, H01R 9/26, H01H 71/08

(54) **DISPOSITIF D'INTERCONNEXION ET TABLEAU ÉLECTRIQUE COMPRENANT UN TEL DISPOSITIF**

(30) Priorité: 09.05.2022 FR 2204365
(71) Demandeur: Schneider Electric Industries SAS, 92500 Rueil-Malmaison (FR)
(72) Inventeur: BERTOUL, Ouajdi, 38100 GRENOBLE (FR); CHRISTOUD, Julien, 38000 GRENOBLE (FR)
(74) Mandataire: Lavoix

(57) **Abrégé**

Ce dispositif d'interconnexion (200) est configuré pour être connecté électriquement à un bornier (160), qui est ménagé sur un côté haut (110) d'un dispositif de distribution (100) et qui comprend des terminaux d'entrée associés à des bus conducteurs du dispositif de distribution. Le dispositif d'interconnexion comprend :
- un jeu de câbles (202), chacun associés à un bus conducteur respectif,
- des couteaux de connexion (220) fixés à l'extrémité des câbles et configurés pour être connectés à un terminal d'entrée respectif,
- un boitier de connexion (230), qui loge les couteaux de connexion.

Selon l'invention, le boitier de connexion comprend une paroi mobile (280), qui est montée basculante par rapport au reste du boitier de connexion et qui est déplaçable par un utilisateur, à la main et sans outil, entre une position verrouillée et une position déverrouillée, la paroi mobile comprend un organe de verrouillage, qui est configuré pour coopérer avec un organe complémentaire ménagé sur le bornier (160) correspondant, formant un dispositif anti-retour qui maintient le boitier de connexion branché sur le bornier.

## Description

La présente invention concerne un dispositif d'interconnexion, notamment pour un dispositif de distribution de courant, et tableau électrique comprenant un tel dispositif d'interconnexion.

Un tableau électrique est utilisé pour gérer et distribuer le courant électrique provenant d'une source de puissance à destination d'une ou plusieurs charges électriques, par exemple une machine-outil, un automate, etc. Le tableau électrique ménage une enceinte abritant un ou plusieurs rails de fixation, qui sont généralement agencés horizontalement. Divers appareils électriques sont montés sur chaque rail de fixation pour distribuer et gérer le courant. Des exemples non limitatifs d'appareils électriques sont un appareil de coupure du courant tel qu'un disjoncteur de puissance - dit aussi *Miniature Circuit Breaker* en anglais, ou MCB -, un appareil de sécurité tel qu'un disjoncteur différentiel - dit aussi *Residuai Current Circuit Breaker* en anglais, ou RCCB -, un porte-fusible, un parafoudre, un contacteur, un automate, etc.

Lors de l'assemblage du tableau électrique, les appareils électriques sont montés sur les rails de fixation déjà positionnés dans l'enceinte, puis les appareils électriques sont reliés entre eux de manière adaptée. De manière traditionnelle, les appareils électriques sont reliés les uns aux autres par des fils électriques, qui sont mis en place un à un par un installateur dans les bornes correspondantes des appareils électriques. Les extrémités des fils sont positionnées une à une, si nécessaire sécurisées par vissage, ce qui prend du temps.

Il est aussi connu, notamment de EP1424756, de fixer un dispositif de distribution du courant électrique directement au rail de fixation. Le dispositif de distribution comprend des terminaux de connexion, qui sont reliés à la source de courant et qui sont ménagés sur une face avant du dispositif de distribution, située au-dessus du rail. Lors du montage d'un appareil électrique au rail, dans le même mouvement l'appareil électrique est connecté électriquement au dispositif de distribution et monté mécaniquement sur le rail.

Selon les configurations, il est parfois nécessaire de relier l'un à l'autre deux appareils électriques montés sur deux rails de fixation voisins, voire de relier l'un à l'autre deux dispositifs de distribution montés sur deux rails voisins.

EP0651481 décrit, par exemple, un dispositif d'interconnexion comprenant trois fils solidarisés les uns aux autres. L'installateur doit mettre en place un à un les extrémités de chaque fil avant de les sécuriser, ce qui prend du temps.

WO03067725 décrit, d'autre part, un dispositif d'interconnexion comprenant des éléments conducteurs rigides se terminant par des couteaux de connexion, de manière à connecter conjointement deux borniers, orientés dans le même sens et agencés l'un au-dessous de l'autre. Lors du branchement, un tel dispositif d'interconnexion risque de se coincer si les borniers ne sont pas parfaitement alignés, ce qui entraine un risque d'échauffement si les couteaux de connexion ne sont pas correctement engagés dans le bornier correspondant. Un tel dispositif d'interconnexion reste difficile à introduire dans l'espace exigu d'un tableau électrique.

C'est à ces problèmes qu'entend plus particulièrement remédier l'invention, en proposant un dispositif d'interconnexion sécurisé.

À cet effet, l'invention concerne un dispositif d'interconnexion, configuré pour être connecté électriquement à un premier bornier d'un dispositif de distribution, dans lequel :
- le dispositif de distribution est configuré :
   - pour être monté sur un rail de fixation d'un tableau électrique et
   - pour relier une source de puissance électrique à un appareil électrique modulaire fixé au rail de fixation, la source de puissance électrique comprenant au moins une phase et optionnellement un neutre,
- le dispositif de distribution comprend :
   - un boitier, réalisé en un matériau électriquement isolant et présentant sensiblement une forme de parallélépipède à la fois allongé, s'étendant selon un axe longitudinal, et aplati, s'étendant selon un plan moyen qui est parallèle à l'axe longitudinal, parallèle à un axe de hauteur et orthogonal à un axe de profondeur, le dispositif de distribution présentant une face avant et une face arrière, qui sont opposées et parallèles au plan moyen, un côté bas, parallèle à l'axe longitudinal et qui ménage un organe d'alignement prévu pour le montage sur le rail de fixation, et un côté haut, opposé au côté bas et relié au côté bas par la face avant et par la face arrière,
   - plusieurs bus conducteurs, qui sont reçus dans le boitier en étant électriquement isolés les uns des autres, chaque bus conducteur étant configuré pour être connecté, respectivement, à une phase de la source de puissance ou optionnellement à un neutre de la source de puissance, les bus conducteurs incluant, pour chaque phase de la source de puissance, un bus de phase connecté à cette phase et, le cas échéant, un bus neutre associé au neutre de la source de puissance,
   - des terminaux de connexion, qui sont reçus dans le boitier et qui sont chacun connectés à un bus conducteur respectif, chaque terminal de connexion étant configuré pour être électriquement connecté à un terminal complémentaire respectif de l'appareil électrique modulaire,
   - le bornier, qui est arrangé en saillie sur le côté du boitier, chaque bornier comprenant des terminaux d'entrée qui sont chacun associés à un bus conducteur respectif et qui sont chacun propres à être connectés à un couteau de connexion respectif appartenant au dispositif d'interconnexion,
- le dispositif d'interconnexion comprend plusieurs câbles, qui forment ensemble un jeu de conducteurs, chaque câble étant associé à un bus conducteur respectif, chaque câble comprenant une portion terminale haut, qui se termine par une première extrémité, une portion terminale basse, opposée à la portion terminale haute et se terminant par une deuxième extrémité, la portion terminale haute et la portion terminale basse étant séparée par une portion intermédiaire,
- les portions terminales hautes et basses de chaque câble forment ensemble, respectivement, une zone terminale haute et une zone terminale basse du jeu de conducteurs,
- pour la zone terminale haute du jeu de conducteurs et, optionnellement, pour la zone terminale basse du jeu de conducteurs, le dispositif d'interconnexion comprend :
   - des couteaux de connexion, qui sont chacun fixés à une extrémité respective d'un câble respectif, les couteaux de connexion étant chacun configurés pour être connecté à un terminal d'entrée respectif, et
   - un boitier de connexion, qui est réalisé en un matériau isolant, qui ménage un volume interne recevant l'extrémité correspondante de chaque câble et une partie de chaque couteau de connexion correspondant, chaque boitier de connexion étant configuré pour coopérer avec un exemplaire respectif du bornier dans une configuration de branchement du boitier de connexion, dans laquelle chaque couteau de connexion associé à ce boitier de connexion est connecté à un terminal d'entrée respectif du bornier correspondant.

### Selon l'invention :

- chaque boitier de connexion comprend une paroi mobile, qui est montée basculante par rapport au reste du boitier de connexion et qui est déplaçable par un utilisateur, à la main et sans outil, par rapport au reste du boitier de connexion entre une position verrouillée et une position déverrouillée,
- la paroi mobile comprend un organe de verrouillage, qui est configuré pour coopérer avec un organe complémentaire ménagé sur le bornier correspondant, formant un dispositif anti-retour lorsque le boitier de connexion est en configuration de branchement, de manière que :
   - lorsque la paroi mobile est en position de verrouillage, l'organe anti-retour empêche de débrancher le boitier de connexion du bornier,
   - lorsque la paroi mobile est en position de déverrouillage, l'organe anti-retour n'empêche pas de débrancher le boitier de connexion du bornier.

Grâce à l'invention, une fois que le boitier de connexion est branché au bornier correspondant, la plaquette mobile est mise en position de verrouillage, de manière à sécuriser le boitier de connexion en configuration de branchement. Les risques de débranchement intempestifs sont réduits.

Selon des aspects avantageux mais non obligatoires de l'invention, un tel dispositif d'interconnexion peut incorporer une ou plusieurs des caractéristiques suivantes prises isolément ou selon toute combinaison techniquement admissible :
- L'organe de verrouillage et l'organe complémentaire sont choisis parmi un ergot et un volume de réception de cet ergot.
- L'organe de verrouillage est une fenêtre, qui est ménagée en creux sur la paroi mobile, tandis que l'ergot est ménagé en saillie sur une paroi périphérique du bornier correspondant.
- Pour chaque boitier de connexion :
   - la paroi mobile est une paroi avant du boitier de connexion, qui est orientée vers un utilisateur lorsque le boitier de connexion est en configuration de branchement sur le bornier correspondant, la paroi mobile étant montée basculante autour d'un axe de bascule parallèle à un axe transverse du boitier de connexion,
   - l'organe de verrouillage est ménagé sur une portion basse, par rapport à l'axe de bascule, de la paroi mobile, et
   - la paroi mobile comprend une zone d'appui, ménagée à distance de l'axe de bascule et d'autre côté de l'axe de bascule par rapport à l'organe de verrouillage, de manière qu'un utilisateur puisse faire passer la paroi mobile de sa position de verrouillage vers sa position de déverrouillage en appuyant sur la zone d'appui.
- Pour chaque boitier de connexion, la paroi mobile est reliée au reste du boitier de connexion par un élément élastique, qui est réalisé d'une seule pièce avec la paroi mobile et qui tend à rappeler, par rappel élastique, la paroi mobile de sa position de déverrouillage vers sa position de verrouillage.
- Chaque paroi mobile est assemblée au reste du boitier de connexion correspondant par des organes d'assemblage formant charnière, tandis que chaque boitier de connexion comprend un organe d'indexage, configuré pour maintenir la paroi mobile en position de verrouillage lorsque la paroi mobile est en position de verrouillage, et pour maintenir la paroi mobile en position de déverrouillage lorsque la paroi mobile est en position de déverrouillage.
- Le dispositif d'interconnexion comprend un deuxième boitier de connexion, les deux boitiers de connexion étant chacun réalisés en un matériau isolant et ménageant chacun un volume interne recevant respectivement la zone terminale haute du jeu de conducteurs et la zone terminale basse du jeu de conducteurs,
- les portions terminales haute et basse de chaque câble sont chacune connectées à un couteau de connexion respectif, chaque couteau de connexion comprenant une portion de connexion qui s'étend vers la direction basse et dépasse d'une face basse du boitier de connexion correspondant,
- les deux boitiers de connexion sont configurés pour être chacun assemblés en configuration branchée à un bornier respectif, les deux borniers appartenant à deux dispositifs de distribution différents,
- chaque boitier de connexion comprend une paroi mobile, qui est montée basculante par rapport au reste du boitier de connexion et qui est déplaçable, par un utilisateur à la main et sans outil, entre une position verrouillée et une position déverrouillée,
- la paroi mobile comprend un organe de verrouillage, qui est configuré pour coopérer avec un organe complémentaire ménagé sur le bornier correspondant, formant un dispositif anti-retour lorsque le boitier de connexion est branché à ce bornier, de manière que :
   - lorsque la paroi mobile est en position de verrouillage, l'organe anti-retour empêche de débrancher le boitier de connexion du bornier correspondant,
   - lorsque la paroi mobile est en position de déverrouillage, l'organe anti-retour n'empêche pas de débrancher le boitier de connexion du bornier correspondant.

L'invention concerne aussi un tableau électrique, comprenant :
- un premier rail de fixation monté dans un volume interne du tableau électrique,
- un premier dispositif de distribution, qui est monté sur le premier rail de fixation et qui comprend un premier bornier ,
- un dispositif d'interconnexion tel que défini précédemment, le boitier de connexion du dispositif d'interconnexion étant branché sur le premier bornier,
dans lequel :
- le dispositif de distribution est configuré pour relier une source de puissance électrique à un appareil électrique modulaire fixé au rail de fixation, la source de puissance comprenant au moins une phase et optionnellement un neutre,
- le dispositif de distribution comprend :
   - un boitier, réalisé en un matériau électriquement isolant et présentant sensiblement une forme de parallélépipède à la fois allongé, s'étendant selon un axe longitudinal, et aplati, s'étendant selon un plan moyen qui est parallèle à l'axe longitudinal, parallèle à un axe de hauteur Z20) et orthogonal à un axe de profondeur, le dispositif de distribution présentant une face avant et une face arrière, qui sont opposées et parallèles au plan moyen, un côté bas, parallèle à l'axe longitudinal et qui ménage un organe d'alignement prévu pour le montage sur le rail de fixation, et un côté haut, opposé au côté bas et relié au côté bas par la face avant et par la face arrière,
   - plusieurs bus conducteurs, qui sont reçus dans le boitier en étant électriquement isolés les uns des autres, chaque bus conducteur étant configuré pour être connecté, respectivement, à une phase de la source de puissance ou optionnellement à un neutre de la source de puissance, les bus conducteurs incluant, pour chaque phase de la source de puissance, un bus de phase connecté à cette phase et, le cas échéant, un bus neutre associé au neutre de la source de puissance,
   - des terminaux de connexion, qui sont chacun connectés à un bus conducteur respectif, qui sont chacun accessibles depuis la face avant et qui sont configurés pour être électriquement connecté à un terminal complémentaire respectif de l'appareil électrique modulaire,
   - le premier bornier, qui est ménagé sur le côté haut du boitier et comprenant des terminaux d'entrée, qui sont chacun reliés à un bus conducteur respectif, chaque terminal d'entrée définit un volume de connexion, qui s'étend selon un plan de connexion orthogonal à l'axe longitudinal et débouche vers le haut.

Avantageusement, le tableau électrique comprend :
- un deuxième rail de fixation, monté dans le volume interne parallèlement au premier rail de fixation et agencé sous le premier rail de fixation,
- un deuxième dispositif de distribution, qui est monté sur le deuxième rail de fixation et qui comprend un deuxième bornier agencé sur un côté haut du deuxième dispositif de distribution,
dans lequel :
- le dispositif d'interconnexion est tel que défini précédemment, et
- le boitier de connexion fixé à la zone terminale haute du dispositif d'interconnexion étant branché sur le premier bornier et, conjointement, le boitier de connexion fixé à la zone terminale basse du dispositif d'interconnexion est branché sur le deuxième bornier.

L'invention sera mieux comprise, et d'autres avantages de celle-ci apparaîtront plus clairement à la lumière de la description qui va suivre, de plusieurs modes de réalisation d'un dispositif d'interconnexion et d'un tableau électrique, conformes à son principe, donnée uniquement à titre d'exemple et faite en référence aux dessins annexés, dans lesquels :
- [Fig 1] la figure 1 est une vue en perspective d'un tableau électrique, comprenant plusieurs dispositifs de distribution et plusieurs dispositifs d'interconnexion conformes à des modes de réalisation ;
- [Fig 2] la figure 2 est une vue perspective du tableau électrique de la figure 1, observé à plus grande échelle et en coupe, certains éléments du tableau électrique étant cachés ;

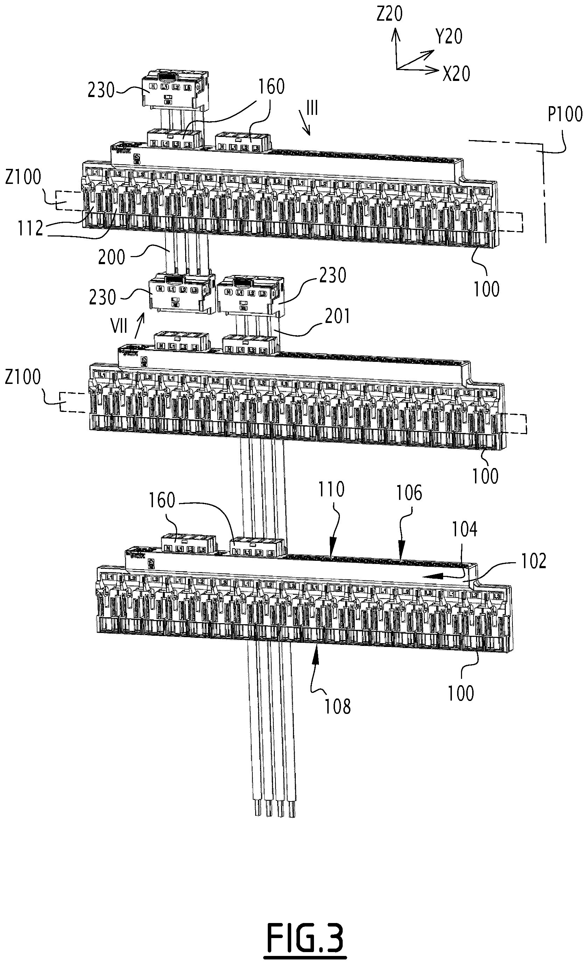

- [Fig 3] la figure 3 est une vue en perspective des dispositifs de distribution et des dispositifs d'interconnexion de la figure 1 ;
- [Fig 4] la figure 4 est une perspective de l'un des dispositifs de distribution de la figure 3, observé selon la flèche III à la figure 3, certains éléments étant cachés pour révéler l'intérieur de ce dispositif de distribution ;
- [Fig 5] la figure 5 représente, sur deux inserts a) et b), une vue en perspective du dispositif de distribution de la figure 4, coupé selon le plan V à la figure 4 et observé respectivement selon deux angles de vue opposés, certains éléments étant cachés ;
- [Fig 6] la figure 6 est une vue en perspective partiellement éclatée d'un dispositif de distribution et de deux appareils électriques du tableau électrique de la figure 1 ;
- [Fig 7] la figure 7 représente, sur deux inserts a) et b), une vue perspective de l'un des dispositifs d'interconnexion de la figure 3, observé selon la flèche VII à la figure 3, certains éléments étant cachés à l'insert b) ;
- [Fig 8] la figure 8 représente, sur deux inserts a) et b), une vue en perspective partielle et éclatée du dispositif d'interconnexion de la figure 7, observé respectivement selon deux angles de vue opposés ;
- [Fig 9] la figure 9 représente, sur deux inserts a) et b), une vue en perspective et en coupe, selon deux plans de coupe parallèles entre eux, du dispositif d'interconnexion de la figure 7 ;
- [Fig 10] la figure 10 représente, sur deux inserts a) et b), une vue de côté du dispositif d'interconnexion de la figure 7, représenté dans deux configurations différentes ;
- [Fig 11] la figure 11 est une vue en perspective d'un dispositif d'interconnexion conforme à un autre mode de réalisation ;
- [Fig 12] la figure 12 est une vue en perspective d'un dispositif de distribution conforme à un autre mode de réalisation ;
- [Fig 13] la figure 13 est une vue en perspective du dispositif de distribution de la figure 12, observé selon un angle de vue opposé de celui de la figure 12, un boitier du dispositif de distribution étant caché ;
- [Fig 14] la figure 14 représente, sur deux inserts a) et b), une vue en perspective d'un dispositif de distribution conforme à un autre mode de réalisation, observé respectivement selon deux angles de vue opposés, un boitier du dispositif de distribution étant caché à l'insert b), et
- [Fig 15] la figure 15 représente, sur deux inserts a) et b), une vue en perspective d'un dispositif de distribution conforme à un autre mode de réalisation, observé respectivement selon deux angles de vue opposés, un boitier du dispositif de distribution étant caché à l'insert b), et
- [Fig 16] la figure 16 est illustre des configurations de connexion entre le dispositif de distribution de la figure 1 vu en coupe et des appareils électriques.

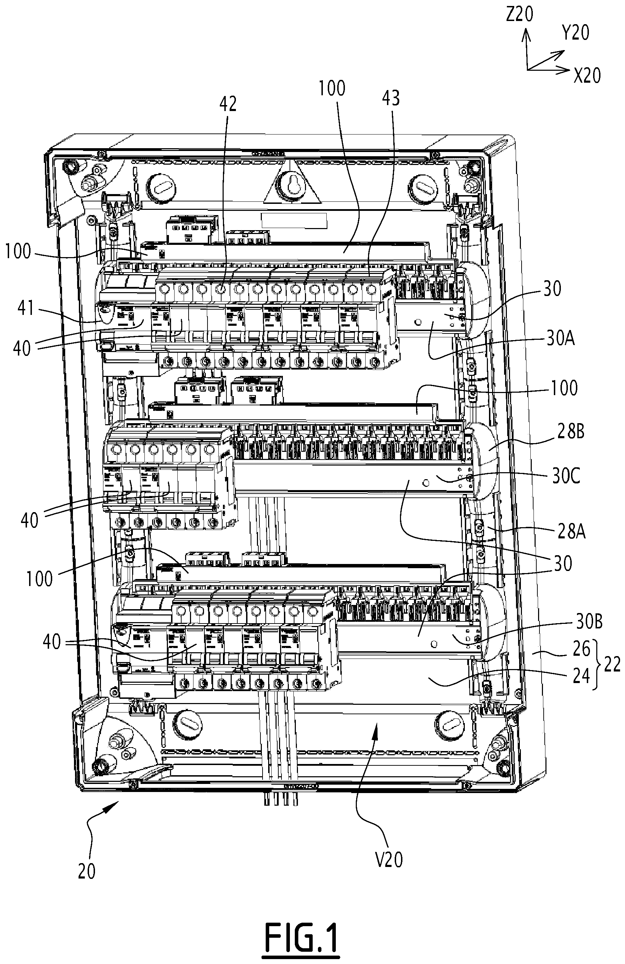

Un tableau électrique 20 conforme à un premier mode de réalisation est représenté sur la figure 1. Le tableau électrique 20 est configuré pour relier une source de puissance électrique à une ou plusieurs charges électriques. La source de puissance électrique et les charges électriques ne sont pas représentées. La source de puissance est ici une source triphasée, c'est-à-dire comprenant trois phases, désignées respectivement L1, L2 et L3, et un neutre désigné N. Selon des exemples non limitatifs, les charges électriques sont une machine-outil ou un automate dans le cadre d'applications industrielles, voire une machine à laver ou un chauffe-eau dans le cadre d'applications domestiques.

Selon la nature de la charge électrique, cette charge électrique est reliée à une ou plusieurs phases de la source de puissance pour bien fonctionner. Ainsi, une simple ampoule électrique n'est connectée qu'à une seule phase et au neutre de la source de puissance, tandis qu'une machine-outil demande d'être connectée aux trois phases de la source de puissance. Dans certains cas particuliers, en fonction notamment des pratiques et/ou les normes un pays donné, une charge électrique doit être branché à deux des phases électriques d'une source de puissance.

Le boitier 20 comprend une enceinte 22, qui délimite un volume interne V20 du tableau électrique 20. Le tableau électrique 20 est configuré pour être monté sur un mur, généralement vertical. Le mur n'est pas représenté. Sauf mention spécifique, les divers éléments du tableau électrique 20 sont représentés sur les figures dans une configuration normale - mais non limitative - d'utilisation. La description qui suit est donnée en référence à l'orientation des divers éléments tels que représentés sur les figures, sachant qu'il peut en être autrement dans la réalité.

L'enceinte 22 comprend un fond 24 et une paroi périphérique 26, qui délimitent le volume interne V20. Le volume interne V20 est généralement refermé par un capot. Le capot n'est pas représenté. Le fond 24 est globalement plan et orthogonal à un axe de profondeur Y20 du tableau électrique 20. Le fond 24 s'étend aussi parallèlement à un axe de hauteur Z20, supposé vertical, et parallèlement à un axe longitudinal X20, supposé horizontal. Les axes longitudinal X20, de profondeur Y20 et de hauteur Z10 forment ensemble un repère direct. Sur la figure 1, l'axe longitudinal X20 est orienté vers la droite, tandis que l'axe de hauteur Z20 est orienté vers le haut.

Le tableau électrique 20 comprend au moins un rail de fixation 30. Dans l'exemple de la figure 1, le tableau électrique 20 comprend trois rails de fixation 30, qui sont de préférence identiques les uns aux autres, qui sont chacun reçus dans le volume interne V20 et qui sont fixés à l'enceinte 22.

Chaque rail de fixation 30 présente une forme allongée s'étendant parallèlement à l'axe longitudinal X20. Dans l'exemple illustré, l'enceinte 22 comprend des montants 28A, qui sont ménagés verticalement le long du fond 24, et des supports 28B, qui sont positionnés sur les montants 28A et qui et qui sont prévus pour le positionnement et la fixation des rails de fixation 30. Chaque rail de fixation 30 fixé au tableau électrique 20 est ainsi agencé parallèlement les uns aux autres, à intervalle régulier le long de l'axe de hauteur Z20. Les rails de fixation 30 incluent un rail haut 30A, situé sur le haut de la figure 1, un rail bas 30B, situé sur le bas de la figure, et un rails milieu 30C, agencé entre le rail haut 30A et le rail bas 30B.

Chaque rail de fixation 30 comprend une portion principale 32 qui est configurée pour porter un ou plusieurs appareils électriques 40. La portion principale 32 présente ici un profil en forme de Ω - Oméga - dit « profil DIN ». D'autres formes sont bien entendu possibles.

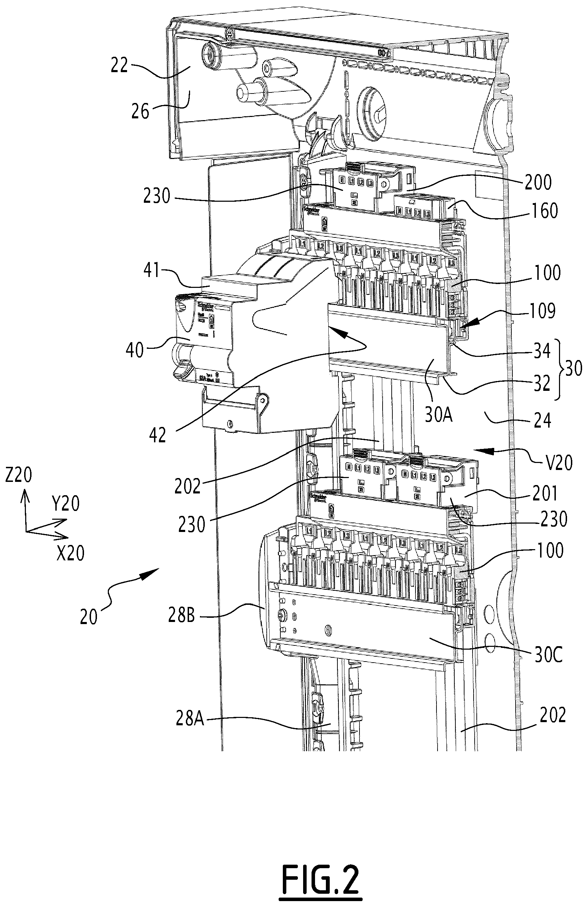

Dans l'exemple de la figure 1, chaque rail de fixation 30 porte plusieurs appareils électriques 40, tandis que sur la figure 2, un seul appareil électrique 40 est représenté, pour révéler les autres éléments du tableau électrique 20. Chaque appareil électrique 40 comprend ainsi une portion de fixation 42, configurée pour coopérer avec la portion principale 32, notamment par complémentarité de forme, de manière à fixer mécaniquement cet appareil électrique 40 au rail de fixation 30 correspondant. Les appareils électriques 40 sont ainsi dits « modulaires », car facile à installer et à brancher dans le tableau électrique 20, comme décrit dans la suite.

Chaque rail de fixation 30 comprend aussi un contre-rail 34, visible à la figure 2, qui est fixé à la portion principale 32 et qui s'étend le long de la portion principale 32, entre la portion principale 32 et le fond 24 du tableau électrique 20. Chaque contre-rail 34 est configuré pour porter un dispositif de distribution 100 respectif, chaque dispositif de distribution 100 surmontant alors le rail de fixation 30 correspondant, comme représenté sur les figures 1 et 2. Ainsi, lors du montage d'un appareil électrique 40 au rail de fixation associé, dans le même mouvement l'appareil électrique 40 est connecté électriquement au dispositif de distribution 100 et monté mécaniquement sur le rail de fixation 40.

Comme mentionné précédemment, selon le type de charge électrique, pour bien fonctionner celle-ci doit être reliée à une, deux, ou trois phases de la source de puissance, et éventuellement au neutre de la source de puissance. Il en est de même pour les appareils électriques 40, qui relient les charges électriques à la source de puissance.

Dans l'exemple illustré, les appareils électriques 40 incluent un premier appareil 41 qui est configuré pour être connecté aux trois phases et au neutre de la source de puissance. Le premier appareil électrique 41 est ici un disjoncteur différentiel, qui est monté sur le rail haut 30A, à proximité d'une extrémité gauche de ce rail haut 30A.

Les appareils électriques 40 incluent aussi un deuxième appareil électrique 42 qui est monté sur le rail haut 30A et qui jouxte le premier appareil 41. Le deuxième appareil 42 est lui aussi configuré pour être connecté aux trois phases et au neutre de la source de puissance. Le deuxième appareil 42 est ici un disjoncteur triphasé. Les appareils électriques 40 incluent aussi un troisième appareil 43, qui est situé à proximité d'une extrémité droite du rail haut 30A. Le troisième appareil 43 est configuré pour être connecté à une seule des phases de la source de puissance et au neutre de la source de puissance. Le troisième appareil 43 est ici un disjoncteur monophasé.

De manière générale, on comprend que selon le type de l'appareil électrique 40, cet appareil 40 doit être connectés à une, deux, ou trois phases de la source électrique, et éventuellement au neutre de la source électrique. Les dispositifs de distribution 100 sont avantageusement configurés pour faciliter ces connexions électriques aux appareils électriques 40 de divers types. En particulier, les dispositifs de distribution 100 du mode de réalisation illustré sont chacun reliés à la fois à chacune des phases L1, L2 et L3 de la source électrique et au neutre N de cette source électrique.

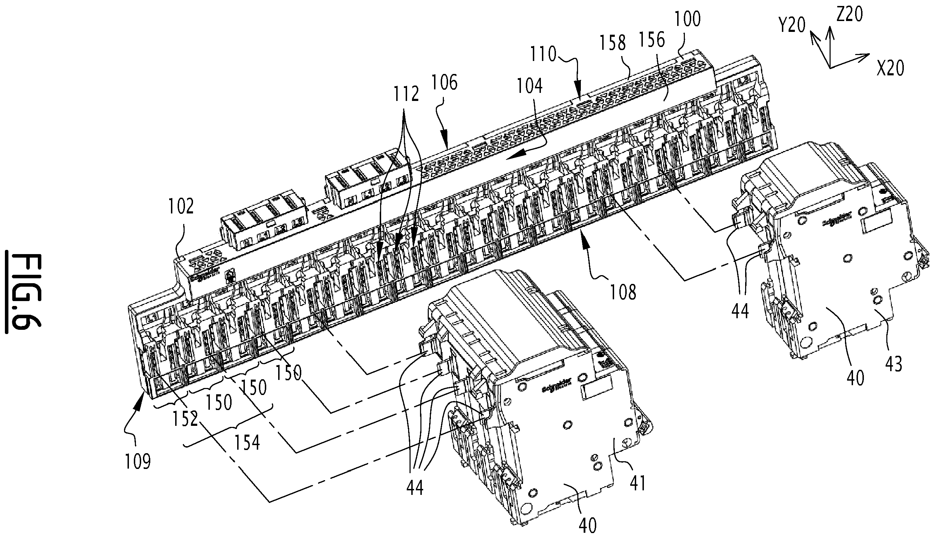

Chaque appareil électrique 40 comprend ainsi plusieurs terminaux dits « complémentaires » 44, qui sont configurés pour être respectivement connectés à une phase de la source de puissante et, le cas échéant, au neutre de la source de puissante. La figure 6 représente donne exemple de réalisation des terminaux complémentaires 44.

Dans l'exemple illustré, le tableau 20 comprend un dispositif d'interconnexion 200, qui relie entre eux deux dispositifs de distribution 100 montés sur des rails de fixation 30 voisins, ici le rail haut 30A et le rail milieu 30C. Ainsi, les appareils électriques 40 montés sur le rail milieu 30C sont reliés à la source électrique par l'intermédiaire du dispositif de distribution 100 surmontant le rail milieu 30C, du dispositif d'interconnexion 200 et du dispositif de distribution 100 surmontant le rail 100.

Le tableau comprend 20 comprend un autre dispositif d'interconnexion 201, qui est conforme à un mode de réalisation alternatif du dispositif d'interconnexion 200. Le dispositif d'interconnexion 201 comprend deux extrémités opposées et est relié par une des extrémités au rail milieu 30C, tandis que l'autre extrémité est ici laissée libre et dépasse à l'extérieur de l'enceinte 22, en vue de la connexion à un autre appareil ou dispositif électrique.

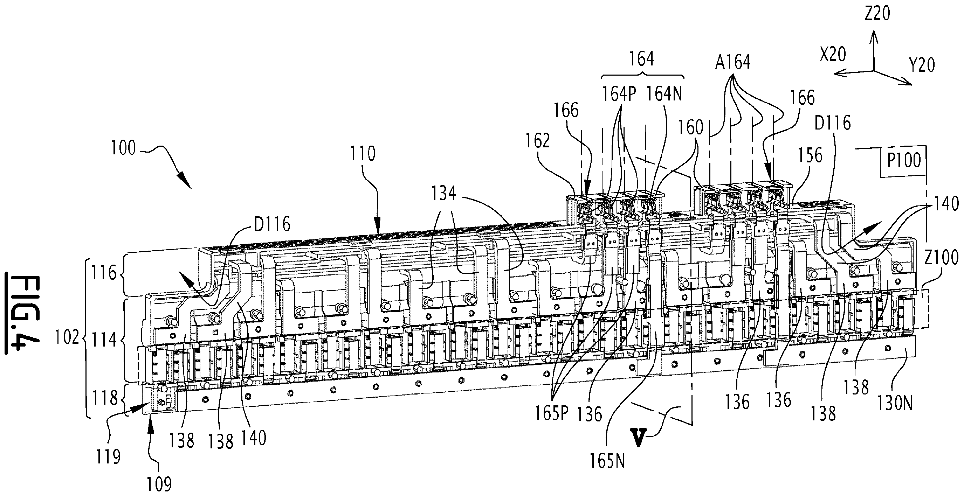

Sur les figures, le tableau électrique 20 comprend trois dispositifs de distributions 100 identiques les uns aux autres. Par extension, les axes et directions définis pour le tableau électrique 20 sont utilisés pour chaque dispositif de distribution 100 dans sa configuration d'utilisation, comme celle représentée sur la figure 1, où chaque dispositif de distribution 100 est assemblé à un rail de fixation 30 respectif, qui sont chacun montés horizontalement dans le tableau électrique 20. On décrit à présent la structure du dispositif de distribution 100 représenté sur les figures 4 à 6.

Le dispositif de distribution 100 comprend un boitier 102, qui est réalisé en un matériau isolant, par exemple en un matériau polymère synthétique tel que du polyamide, notamment du polyamide PA6. Le boitier 102 présente une forme à la fois allongée, qui s'étend selon l'axe longitudinal X20, et aplatie, s'étendant selon un plan moyen P100 qui est parallèle à l'axe longitudinal X20, parallèle à l'axe de hauteur Z20 et orthogonal à l'axe de profondeur Y20. Le dispositif de distribution 100 comprend ainsi une face avant 104 et une face arrière 106, qui sont opposées l'une à l'autre et qui sont parallèles au plan moyen P100, un côté bas 108, qui ménage un organe d'alignement 109, configuré pour être monté sur le contre-rail 34 du rail de fixation 30 correspondant, et un côté haut 110, qui est opposé au côté bas 108 et qui est relié au côté bas 108 par la face avant 104 et par la face arrière 106. L'organe d'alignement 109 est par exemple une gorge, ménagée en creux parallèlement à l'axe longitudinal X20 et configurée pour coopérer, notamment par complémentarité de forme, avec le contre rail 34 correspondant.

En configuration d'utilisation, la face avant 104 est orientée vers un utilisateur se tenant face au tableau électrique 20, tandis que le côté bas 108, par lequel le dispositif de distribution 100 est monté sur le rail de fixation 30 correspondant, est orthogonal à l'axe de hauteur Z20 et orienté vers le bas.

Le dispositif de distribution 100 comprend des terminaux de connexion 120, qui sont reçus dans le boitier 102 et qui sont chacun configurés pour être électriquement connectés à un terminal complémentaire 44 respectif de l'appareil électrique 40 correspondant. Chaque terminal de connexion 120 comprend deux lames-ressort 122, qui sont reliées entre elles par un fond 123 et qui sont agencées en regard l'une de l'autre et qui ménagent entre elles un volume de connexion, configuré pour recevoir le terminal complémentaire 44 associé selon un axe de branchement A120. Chaque volume de connexion V120 débouche ainsi de la face avant 104 par passage de connexion 112 respectif ménagé au travers de la face avant 104. Les passages de connexion 112 sont ici des fentes, configurées pour guider les terminaux complémentaires 44 lors du montage d'un appareil électrique 40 sur le dispositif de distribution.

Les lames-ressorts 122 sont déformable élastiquement et sont configurées pour pincer le terminal complémentaire 44 correspondant. Les terminaux complémentaires 44 ont ici une forme de lame, aussi chaque volume de connexion V120 est sensiblement plan. et s'étend selon un plan de connexion P120, tandis que l'axe de branchement A120 est parallèle au volume de connexion V120 et orthogonal au fond 123. Les terminaux de connexion 120 sont de préférence identiques les uns aux autres, de manière à rationaliser leur fabrication.

Chaque terminal de connexion 120 comprend aussi une patte de connexion 124, qui est reliée aux lames-ressorts 122. Dans l'exemple illustré, la patte de connexion 124 prolonge le fond 123 et est configurée pour être pliée, de manière à être connectée à d'autres éléments conducteurs du dispositif de distribution 100.

Les terminaux de connexion 120 sont agencés de manière que chaque plan de connexion P120 est orthogonal à l'axe longitudinal X20, tandis que tous les axes de connexion A120 sont parallèles entre eux orthogonalement à la face avant 104, autrement dit parallèles à l'axe de profondeur Y20. Les terminaux de connexion 120 sont arrangés le long du dispositif de distribution 100, c'est-à-dire selon l'axe longitudinal X20, et forment ensemble une zone de connexion Z100 du dispositif de distribution 100. La zone de connexion Z100 est représentée par un cadre en pointillés sur les figures. La zone de connexion Z100 est ici une portion de la face avant 104, où sont ménagés les passages de connexion 112.

Le dispositif de distribution comprend plusieurs bus conducteurs 130. Les bus conducteurs 130 sont réalisés en un matériau métallique, de préférence en un alliage de cuivre, aussi les bus conducteurs 130 sont parfois appelés « des cuivres ». Les bus conducteurs 130 s'étendent le long du dispositif de distribution 100 parallèlement à l'axe longitudinal X20 et sont reçus dans le boitier 102 en étant électriquement isolés les uns des autres. Chaque bus conducteur 130 est configuré pour être connecté, respectivement, à une phase L1, L2 ou L3 de la source de puissance et au neutre N de la source de puissance, tandis que chaque terminal de connexion 120 est connecté à un des bus conducteurs 130.

Les bus conducteurs 130 incluent trois premiers bus conducteurs, dits bus de phase 130P, chacun configurés pour être connecté à une phase respective de la source de puissance, et un quatrième bus conducteur, dit bus neutre 130N, configuré pour être connecté au neutre de la source de puissance.

Chaque bus de phase 130P comprend une portion principale 132, qui s'étend parallèlement à l'axe longitudinal X20, et des bus transverses 134, qui relie chaque portion principale 132 aux terminaux de connexion 120 associés. Chaque portion principale 132 est donc associée à plusieurs bus transverses 134, avec le même nombre de bus transverses 134 pour chaque portion principale 132. Comme le dispositif de distribution 100 comprend trois bus de phase 130P, le nombre total de bus transverse 134 est un multiple de trois. Dans l'exemple illustré, le dispositif de distribution 100 comprend dix-huit bus transverse 134, six bus transverses 134 étant connectés à chaque portion principale 132.

Dans l'exemple illustré, les bus transverses 134 sont des pièces distinctes des portions principales, qui sont fabriquées par pliage et/ou découpage d'une plaque métallique et qui sont soudées aux portions principales 132, chaque bus transverses 134 s'étendant parallèlement au plan moyen P100.

Les bus de phase 130P sont agencés d'un même côté par rapport à la zone de connexion Z100, ce qui contribue à la compacité du dispositif de distribution 100. Plus précisément, les portions principales 132 présentent une section aplatie et sont empilées à plat les unes sur les autres, tout en restant électriquement isolées les unes des autres, de manière à former un empilement 133 des portions principales 132.

Dans l'exemple illustré, chaque portion principale 132 présente, dans un plan orthogonal à l'axe longitudinal X20, une section rectangulaire, avec deux grands côtés opposés et deux petits côté opposés, les grands côtés étant agencés parallèlement à l'axe de profondeur Y20. Les portions principales 132 sont agencées d'un même côté par rapport à la zone de connexion Z100 et sont superposées les unes par rapport aux autres selon l'axe de hauteur Z20, formant l'empilement 133. Dans l'exemple illustré, chaque portion principale 132 a une section de 12 mm², les petits côtés mesurant ici 2 mm et les grands côtés mesurant 6 mm.

Le boitier 102 comprend une portion centrale 114, qui loge les terminaux de connexion 120, une portion supérieure 116, qui loge les portions principales 132, et une portion inférieure 118, qui comprend le côté bas 108. La portion supérieure 116 présente ici une forme de parallélépipède allongé selon l'axe longitudinal X20, tandis que la portion principale 114 comprend les passages de connexion 112 ménagés sur la face avant 104, et que la portion inférieure 118 comprend l'organe d'alignement 109.

De préférence, la portion supérieure 116 est agencée, par rapport à la portion centrale 114, du côté opposé de la portion inférieure 118. Autrement dit, l'empilement 133 est de préférence situé du côté opposé de l'organe d'alignement 109 par rapport à la zone de connexion Z100, c'est-à-dire au-dessus de la zone de connexion Z100. La zone de connexion Z100 du dispositif de distribution 100 est ainsi placée au même endroit qu'une zone de connexion d'un dispositif de distribution monophasé de l'art antérieur, tel que décrit dans EP1424756. Le dispositif de distribution 100 est ainsi compatible avec des appareils électriques configurés pour être connectés sur ce dispositif de distribution monophasé de l'art antérieur.

De préférence, l'empilement 133 des portions principales 132 est aligné, selon l'axe de hauteur Z20, avec les terminaux de connexion 120, plus précisément avec les lames ressort 122, ce qui permet de réduire une épaisseur du boitier 102, mesurée parallèlement à l'axe de profondeur Y20. Dans l'exemple illustré, le bus neutre 130N est fabriqué dans une bande métallique de forme allongée.

Le boitier 102 du dispositif de distribution 100 ménage un volume de réception 119 du bus neutre 130N. Le bus neutre 130N est reçu dans le volume de réception 119 et est soudé à la patte de connexion 124 de chaque terminal de connexion 120 correspondant. Le volume de réception 119 du bus neutre 130N est de préférence agencé, par rapport à la zone de connexion Z100, du côté opposé des portions principales 132. Le volume de réception 119 du bus neutre 130N est ici ménagé dans la portion inférieure 118 le long de l'organe d'alignement 109. Le bus neutre 130N se retrouve parallèle au rail de fixation 30 lorsque le dispositif de distribution 100 est monté sur ce rail de fixation 30, cet agencement du bus neutre 130N étant particulièrement compact.

Chaque portion principale 132 comprend deux extrémités opposées, qui sont chacune situées en retrait par rapport à la zone de connexion Z100 selon l'axe longitudinal X20, de manière que la portion supérieure 116 du boitier 102 forme deux dégagements D116 par rapport à la portion centrale 114, de manière à faciliter l'accès de la face avant 104 du boitier 102 vers la face arrière 106 du boitier 102. Les dégagements D116 permettent ainsi, lorsque le dispositif de distribution 100 est en configuration d'utilisation, d'accéder aux montants 28A et/ou aux supports 28B qui maintiennent le rail de fixation 30 sur lequel est monté le dispositif de distribution 100.

Les bus transverses 134 incluent des bus intermédiaires 136, qui présentent ici chacun une forme de L, et des bus d'extrémité 138, qui sont reliés aux bus de phase 130P au voisinage des extrémités des bus de phase 130P et qui présentent chacun une portion inclinée 140 par rapport aux axes longitudinal X20 et de hauteur Z20. Dans l'exemple de la figure 4, les bus transverses 134 incluent un total de quatre bus d'extrémité 138, avec deux bus d'extrémité 138 agencés au voisinage de chacune des extrémités de la portion supérieure 116 du boitier 102.

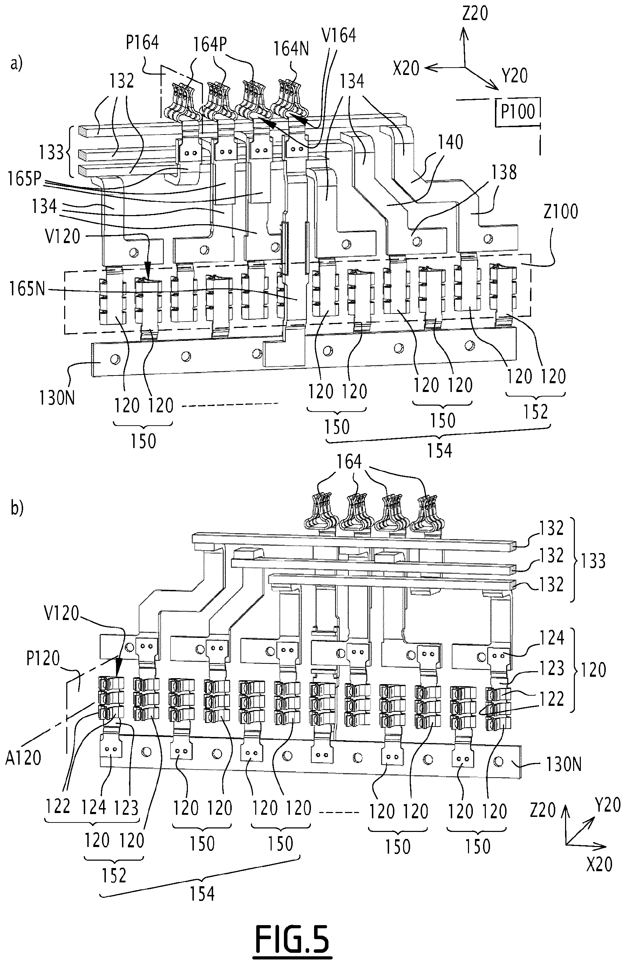

Comme on le voit sur les figures 4 et 5, certains parmi terminaux de connexion 120 sont connectés à un bus de phase 130P, tandis que d'autres parmi les terminaux de connexion 120 sont connectés au bus neutre 130N.

Les terminaux de connexion 120 sont agencés par paires 150 de deux terminaux de connexion 120 consécutifs. La zone de connexion Z100 est donc formée d'un alignement de paires 150 et comprend autant de paires 150 que de bus transverse 134.

Chaque paire 150 comprend un terminal de connexion 120 connecté au bus neutre 130N, et un autre terminal de connexion 120 connecté à l'un des bus de phase 130P.

Les paires 150 incluent deux paires d'extrémité 152, chacune située à une extrémité respective de la zone de connexion Z100. Chaque paire d'extrémité 152 et les deux paires 150 voisines de cette paire d'extrémité 152 forment ensemble un motif 154, qui est répété le long de l'axe longitudinal X20, l'ensemble des motifs 154 formant la zone de connexion Z100 du dispositif de distribution 100. Chaque paire 150 du motif 154 est associée à une phase respective de la source de puissance.

Plus généralement, pour trois paires 150 consécutives quelconques, chacune des paire 150 est ainsi associée à un bus de phase 130P respectif. Pour chaque paire 150, un premier des deux terminaux de connexion 120 de cette paire est connecté au bus de phase 130P correspondant, tandis que l'autre terminal de connexion 120 de cette paire est connecté au bus neutre 130N. Pour deux paires 150 consécutives quelconques, un terminal de connexion 120 connecté au bus neutre 130N est intercalé entre les deux terminaux de connexion 120 connectés aux bus de phases 130P.

Dans l'exemple illustré, lorsque le dispositif de distribution 100 est en configuration d'utilisation, les six terminaux de connexion 120 situées le plus à gauche sur la face avant 104 forment ainsi le motif 154, qui est ici une succession « neutre N - première phase L1 - neutre N - deuxième phase L2 - neutre N - troisième phase L3 ». Avantageusement, les positions du neutre et/ou des phases sont indiquées sur la face avant 104, par exemple par un caractère alphanumérique, de préférence gravé dans le matériau du boitier 102.

La figure 6 illustre, par deux exemples, la logique de branchement du dispositif de distribution 100. Deux appareils électriques 40, plus précisément le premier appareil électrique 41 et le troisième appareil électrique 43, sont représentés séparés du dispositif de distribution 100 pour révéler les terminaux complémentaires 44.

Chaque appareil électrique 40 comprend des organes de positionnement, configurés pour aligner cet appareil électrique 40 par rapport aux paires 150 lors du montage de cet appareil électrique sur le dispositif

Le premier appareil 41 est ici un disjoncteur différentiel, qui comprend quatre terminaux complémentaires 44. Ces quatre terminaux 44 sont agencés pour coopérer avec des terminaux de connexion 120 appartenant à quatre paires 150 consécutives. Plus précisément, un des terminaux complémentaires 44 est configuré pour coopérer avec un terminal de connexion 120 relié au bus neutre 130N, tandis que les trois autres terminaux complémentaires 44 sont configurés pour être reliés à trois terminaux de connexion 120 reliés aux bus de phase 130P et appartenant à trois paires 150 consécutives, autrement dit ces trois terminaux complémentaires 44 sont configurés pour être reliés à chacune des phases de la source de puissance. On comprend donc que quelle que soit la position du premier appareil 41 le long de la zone de connexion Z100, ce premier appareil 41 sera toujours relié à chacune des phases L1, L2 et L2 et au neutre N de la source de puissance.

Le troisième appareil 43 est ici un disjoncteur de puissance, qui comprend deux terminaux complémentaires 44. Ces deux terminaux 44 sont agencés pour coopérer avec des terminaux de connexion 120 appartenant à deux paires 150 consécutives. Plus précisément, un des terminaux complémentaires 44 est configuré pour coopérer avec un terminal de connexion 120 relié au bus neutre 130N, tandis l'autre terminal complémentaire 44 est configuré pour être relié à un terminal de connexion 120 relié à l'un des bus de phase 130P et appartenant à la paire 150 voisine. On comprend donc que selon la position du troisième appareil 43 le long de la zone de connexion Z100, l'installateur peut choisir laquelle des phases L1, L2 ou L2 est reliée au troisième appareil 43.

Le dispositif de distribution 100, avec son agencement particulier des terminaux de connexion 120 reliés aux phases L1, L2 et L3 et au neutre N de la source de puissance, est particulièrement avantageux car il permet de connecter facilement aussi bien un appareil électrique 40 configuré pour être connecté aux trois phases et au neutre de la source de puissance, par exemple le premier appareil 41, qu'un appareil électrique 40 monophasé, par exemple le troisième appareil 43.

Il suffit, lors de la conception des appareils électriques 40, d'agencer les terminaux complémentaires 44 aux endroits choisis pour coopérer avec les terminaux de connexion 120 reliés aux phases et/ou au neutre de la source de puissance.

Selon un exemple non illustré, un appareil électrique comprend deux terminaux complémentaires 44 configurés pour être connectés aux deux terminaux de connexion 120 d'une même paire 150.

De préférence, pour deux quelconques terminaux de connexion 120 consécutifs, les plans de connexions P100 correspondants sont séparés de 9 mm. On garde ainsi la compatibilité avec les appareils électriques utilisés avec les dispositifs de distribution monophasés de l'art antérieur, en particulier avec les appareils électriques présentant une largeur, mesurée selon l'axe longitudinal, égale à 18 mm ou à un multiple de 18 mm.

Selon un autre exemple non illustré, un appareil électrique comprend deux terminaux complémentaires 44 configurés pour être connectés aux deux terminaux de connexion 120 de deux paires 150 consécutives, ces deux terminaux 150 étant reliés aux bus de phase 130P.

Selon un autre exemple non illustré, un appareil électrique comprend trois terminaux complémentaires 44, incluant deux terminaux complémentaires 44 configurés pour être connectés à deux terminaux de connexion 120 reliés aux bus de phase 130P, et un troisième terminal complémentaire 44 configuré pour être connecté à un terminal de connexion 120 relié au bus neutre 130N.

Dans l'exemple illustré, le boitier 102 comprend un flasque avant 156 et un flasque arrière 158, qui sont assemblés l'un à l'autre et qui forment ensemble le boitier 102. Le flasque avant 156 comprend la face avant 104, et est ainsi configuré pour recevoir les appareils électriques 40. Les passages de connexion 112 sont ainsi ménagés au travers du flasque avant 156. Le flasque avant 156 ménage un volume interne, qui est refermé par le flasque arrière 158 et dans lequel sont reçus les terminaux de connexion 120. Plus précisément, lorsque chaque terminal de connexion 120 est assemblé au flasque avant 156 et est reçu dans le volume interne du flasque avant 156, chaque plan de connexion P120 étant aligné avec le passage de connexion 112 correspondant. Lors que le flasque arrière 158 est assemblé au flasque avant 156, les terminaux de connexions 120 sont maintenus en position, par flasque arrière 158, dans le volume interne du flasque avant 156. Dans l'exemple illustré, le flasque arrière 158 appuie sur le fond 123 de chaque terminal de connexion 120.

Une telle configuration permet un positionnement plus précis de chaque terminal de connexion 120 par rapport au passage de connexion 112 correspondant, par rapport aux dispositifs de distribution de l'art antérieur, par exemple tel que décrit dans EP1424756, où les terminaux de connexions sont positionnés sur le flasque arrière puis recouverts par le flasque avant.

Avantageusement, l'ensemble des bus conducteurs 130 et des terminaux de connexion 120 est positionné par rapport au flasque avant 156 dans le volume interne du flasque avant 156, le flasque arrière 158 étant ensuite assemblé au flasque avant 156 pour refermer le flasque arrière.

Le dispositif de distribution 100 comprend aussi deux borniers 160. L'intérieur des borniers 160 est visible notamment à la figure 4.

Chaque bornier 160 est ici ménagé dans une saillie 162 du boitier 102. La saillie 162 présente ici globalement une forme de parallélépipède et est de préférence ménagée sur la portion supérieure 116, de l'autre côté de la zone de connexion Z100 par rapport à l'empilement 133 des portions principales 132. Chaque bornier 160 est de préférence agencé sur le côté haut 110 du boitier 102.

Chaque bornier 160 comprend des terminaux d'entrée-sortie, dits simplement terminaux d'entrée 164, qui sont reçus dans la saillie 162 et qui sont chacun connectés à un bus conducteur 130 respectif du dispositif. Les terminaux d'entrée 164 fonctionnent de la même façon que les terminaux de connexion 120 et ont avantageusement une structure similaire, voire identique, aux terminaux de connexion 120, la patte de fixation 124 étant simplement pliée différemment. Ceci permet de rationaliser la fabrication des terminaux d'entrée 164, et donc de réduire le coût du dispositif de distribution 100.

Pour chaque bornier 160, les terminaux d'entrée 164 correspondants incluent des premier terminaux d'entrée 164P, qui sont chacun connectés à un bus de phase 130P respectif. Chaque bornier 160 comprend ainsi trois premier terminaux d'entrée 164P. Chaque premier terminal d'entrée 164P est relié au bus de phase 130P correspondant par un raccord de phase 165P. Dans l'exemple illustré, certains parmi les raccords de phase 165P sont raccordés directement aux bus de phase 130P correspondant, tandis que d'autres raccord de phase 165P sont connectés aux bus intermédiaires 136 reliés aux bus de phase 130P correspondants.

Le dispositif de distribution 100 comprenant aussi le bus neutre 130N, les terminaux d'entrée 164 de chaque bornier 160 incluent, outre les terminaux de phase 164P, un autre terminal d'entrée, dit aussi terminal neutre 164N, qui est connecté au bus neutre 130N. Chaque le terminal neutre 164N est relié au bus neutre 130N par un raccord de neutre 165N.

Chaque terminal d'entrée 164 délimite un volume de connexion V164, qui s'étend selon un plan de connexion P164. Chaque terminal d'entrée 164 définit un axe de connexion A164, qui est une direction d'insertion d'un couteau de connexion 220 appartenant à l'un des dispositifs d'interconnexion 200 ou 201, qui sont décrits plus loin. Chaque axe de connexion A164 est ainsi parallèle au plan de connexion P164 correspondant.

Chaque volume de connexion V164 débouche ainsi de la saillie 162 parallèlement à l'axe de connexion A164 correspondant par une fente de connexion 166 respective. Dans l'exemple illustré, chaque plan de connexion P164 est agencé orthogonalement à l'axe longitudinal X20, tandis que chaque axe de connexion A164 est parallèle à l'axe de hauteur Z20. Autrement dit, le volume de réception V164 de chaque terminal d'entrée 164 débouche vers le haut du dispositif de distribution 100.

Chaque bornier 160 est ainsi configuré pour être connecté à un dispositif d'interconnexion 200 ou 201 selon un mouvement vertical, autrement dit parallèle à l'axe de hauteur Z20, orienté du haut vers le bas.

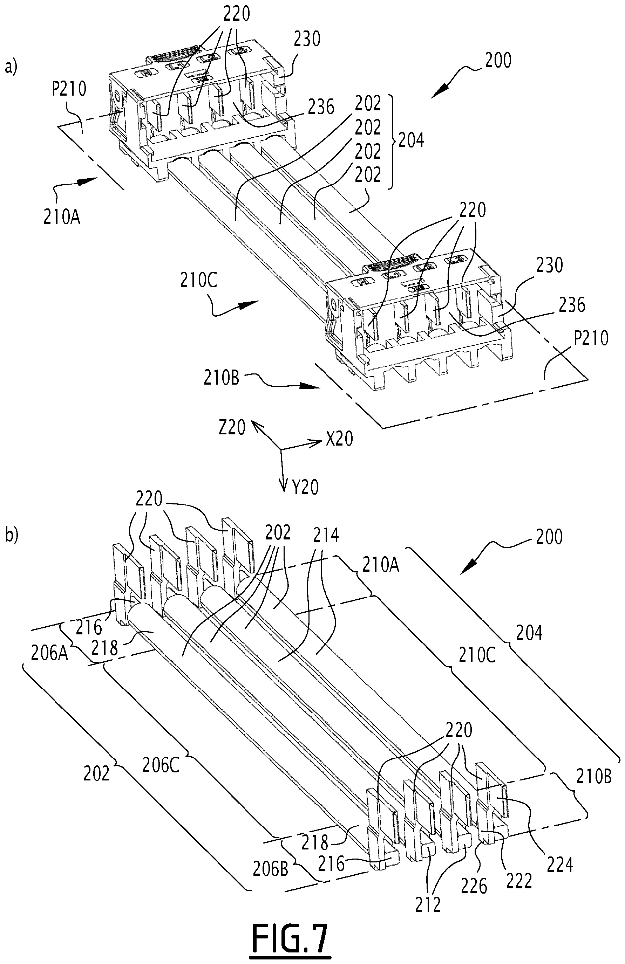

On décrit à présent le dispositif d'interconnexion 200 illustré sur les figures 7 à 10.

Le dispositif 200 comprend plusieurs éléments conducteurs, ici des câbles 202. Chaque câble 202 est associé à un bus conducteur 130 respectif. Les câbles 202 forment ensemble un jeu de conducteurs 204, qui comprend donc ici quatre câbles 202.

Chaque câble 202 comprend une portion terminale haute 206A, qui se termine par une première extrémité, une portion terminale basse 206B, opposée à la portion terminale haute 206A et se terminant par une deuxième extrémité, la portion terminale haute 206A et la portion terminale basse 206B étant séparée par une portion intermédiaire 206C. Les câbles 202 sont orientés dans le même sens. Sur la figure 7, les portions terminales hautes 206A sont situées sur la gauche. Par extension, les portions terminales hautes 206A, basses 206B et intermédiaires 206C de chaque câble 202 forment ensemble, respectivement, une zone terminale haute 210A, une zone terminale basse 210B et une zone intermédiaire 210C du jeu de conducteurs 204.

Chaque câble 202 comprend une âme conductrice 212 recouverte d'une gaine 214 réalisée en un matériau polymère isolant. La portion terminale haute 206A et la portion terminale basse 206B de chaque câble 202 comprend une portion dénudée 216, et une portion isolée 218, recouverte de la gaine 214. Dans l'exemple illustré, chaque portion dénudée 206 est compactée et présente une section sensiblement carrée.

Chaque câble 202 est flexible, c'est-à-dire configuré pour se déformer élastiquement en flexion ou en torsion. Sur les figures, les câbles 202 sont représentés rectilignes, sachant qu'il peut en être autrement dans la réalité. Une direction basse du jeu de conducteurs 204 - et par extension du dispositif d'interconnexion 200 - est une direction orientée le long du jeu de conducteurs 204 de la zone terminale haute 210A vers la zone terminale basse 210B.

Les portions terminales hautes 206A et basses 206B sont solidarisées entre elles, de manière que les portions terminales hautes 206A ou basses 206B sont maintenues parallèles entre elles et orientées dans le même sens, les portions terminales hautes 206A ou basses 206B étant géométriquement portées par un plan terminal P210 respectif. Chaque plan terminal P210 est parallèle aux portions terminales hautes 206A ou basses 206B correspondantes et à un axe transverse X210, orthogonal aux portions terminales.

Par extension, la zone terminale haute 210A ou basse 210B correspondante est elle-aussi géométriquement portée par le plan terminal P210 correspondant. La zone intermédiaire 210C conserve cependant sa flexibilité, permettant de compenser les écarts d'alignement entre les deux borniers 160 reliés par le dispositif d'interconnexion 200.

Le dispositif d'interconnexion 200 comprend des couteaux de connexion 220, qui sont chacun fixés à l'extrémité d'un câble 202 respectif du jeu de conducteurs 204 et qui sont chacun configurés pour être connecté à un terminal d'entrée 164 respectif.

Chaque couteau 220 comprend une portion de fixation 222, qui est fixée à l'extrémité du câble 202 correspondant, et une portion de connexion 224, qui est configurée pour être reçue dans le volume de connexion V164 du terminal d'entrée 164 correspondant. La portion de fixation 222 comprend aussi un doigt de guidage 226, qui est agencé à l'opposé de la portion de connexion 224 par rapport au plan terminal P210.

Chaque portion de connexion 224 est agencée à distance de l'extrémité du câble 202 correspondant, est sensiblement plane et s'étend orthogonalement au plan terminal P210 correspondant, d'un même côté de ce plan terminal P210 et vers la direction basse du dispositif d'interconnexion 200. Les couteaux de connexion 220 d'une même zone terminale haute 210A ou basse 210B sont configurés pour être conjointement connectés aux terminaux d'entrée 164 d'un même bornier 160, dans une configuration branchée de cette zone terminale haute 210A ou basse 210B. Lorsque la zone terminale haute 210A ou basse 210B est en configuration branchée sur le bornier 160 d'un dispositif de distribution 100, le plan terminal P210 correspondant est parallèle au plan moyen P100 de ce dispositif de distribution 100, tandis que l'axe transverse X210 est parallèle à l'axe longitudinal X20, et que chaque câble 202 est parallèle à l'axe de hauteur Z20. Lorsque le dispositif de distribution 100 monté dans le tableau électrique 20 en configuration d'utilisation, le jeu de conducteurs 204 est situé entre, d'une part, le rail de fixation 30 et le dispositif de distribution 100 et, d'autre part, le fond 24 de l'enceinte 22.

Pour chacune des zones terminales haute 210A et basse 210B, le dispositif d'interconnexion comprend un boitier de connexion 230. Le boitier 230 est réalisé en un matériau isolant et ménage un volume interne V230 recevant les extrémités correspondantes des câbles 202 et au moins une partie de chaque couteau de connexion 220 fixé à ces extrémités, chaque portion de connexion 224 dépassant à l'extérieur du boitier de connexion 230. Dans l'exemple illustré, chaque boitier de connexion 230 comprend une portion avant 232 et une portion arrière 234 complémentaire, la portion avant 232 et la portion arrière 234 étant assemblées l'une à l'autre et délimitant ensemble le volume interne V230.

Chaque boitier de connexion 230 comprend aussi une paroi basse 236, ici ménagée sur la portion avant 232. La paroi basse 236 limite, vers la direction basse, le volume interne V230. Des lumières 237 sont ménagées dans la paroi basse 236, par lesquelles le volume interne V230 débouche vers l'extérieur du boitier de connexion 230. Chaque lumière 237 est agencée de sorte que lorsque le couteau de connexion 220 est reçu dans le volume interne V230 dans une configuration d'utilisation, la portion de connexion 224 traverse la lumière 230 correspondante, comme représenté sur la figure 7 a).

Chaque boitier de connexion 230 comprend une paroi mobile 280, qui est montée basculante par rapport au reste du boitier de connexion 230 et qui sert au verrouillage du boitier de connexion 230 en configuration branchée sur le bornier 160 correspondant. La paroi mobile 280 est décrite plus loin.

Avantageusement, chaque boitier de connexion 230 comprend des organes de guidage 238, configurés pour coopérer, notamment par complémentarité de forme, avec des organes de guidage complémentaires 168 ménagés sur le bornier 160 correspondant, de manière à aligner la direction basse du dispositif d'interconnexion 200 sur l'axe de hauteur Z20 du dispositif de distribution 100 et à guider en translation le boitier de connexion 230 par rapport au bornier 160 correspondant parallèlement à l'axe de hauteur Z20. Dans l'exemple illustré, les organes de guidage 238 sont des gorges, ménagées en creux dans la portion avant 232, tandis que les organes de guidage complémentaires 168 sont des languettes, ménagées en saillie sur le boitier 102.

Lors de l'assemblage du boitier de connexion 230, la gaine 214 de chaque câble 202 est pincée entre la portion avant 232 et la portion arrière 234, de manière à empêcher les mouvements la gaine 214 par rapport au boitier de connexion 230. À cet effet, la portion avant 232 et la portion arrière 234 ménagent respectivement des zones d'appui 240 et 242, prévues pour recevoir chaque portion isolée 218. Les mouvements de translation de chaque couteau de connexion 220 par rapport au boitier de connexion 230 parallèlement aux câbles 202 sont donc empêchés.

La gaine 214 étant élastiquement déformable, chaque boitier de connexion 230 est ainsi fixé à la gaine 214 de la portion isolée 218, de manière à autoriser les mouvements de la portion dénudée 216 par rapport au boitier de connexion 230 correspondant, par déformation élastique de la gaine 214 de la portion isolée 218. Avantageusement, la gaine 214 est réalisée en polysiloxane, dit aussi silicone, qui est plus souple que d'autres matériaux traditionnellement utilisés pour les gaines de câbles électriques, par exemple le PVC.

Le volume interne V230 de chaque boitier de connexion 230 inclut des logements 244, chaque logement 244 recevant un couteau de connexion 220 respectif. Autrement dit, chaque boitier de connexion 230 comprend quatre logements 244, qui forment ensemble le volume interne V230 du boitier de connexion. Chaque logement 244 débouche ainsi vers l'extérieur au travers de la paroi basse 236 par une lumière 237 respective.

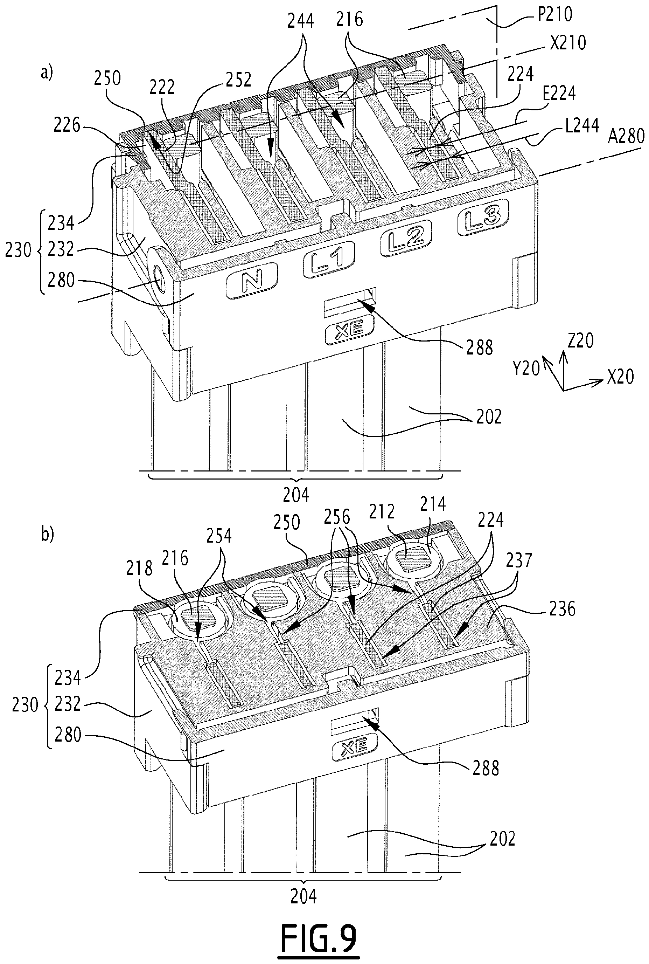

Chaque couteau de connexion 220 est reçu dans le logement 244 correspondant avec un jeu dimensionnel ménagé autour de chaque couteau de connexion 220, de manière à autoriser les mouvements, avec une amplitude limitée selon l'axe transverse, de la portion de connexion 224 correspondante par rapport à ce boitier de connexion 230. Dans l'exemple de la figure 9, chaque portion de connexion 224 présente une épaisseur E224, mesurée parallèlement à l'axe transverse X210, égale à 1 mm, tandis que le logement 244 ménage, autour de la portion de connexion 224, un espace présentant une largeur L244, mesurée parallèlement à l'axe transverse X210, égale à 1,8 mm. Il y donc un jeu total de 0,8 mm, qui autorise les mouvements, avec une amplitude limitée selon l'axe transverse X210, de la portion de connexion 224. En pratique, le jeu total est compris entre 0,3 mm et 1 mm, de préférence égal à 0,8 mm.

Le boitier de connexion 230 comprend une paroi arrière 250, qui appartient ici à la portion arrière 234. La paroi arrière 250 délimite le logement 244 et ménage une gorge 252, qui est orientée vers le logement 244 et qui s'étend parallèlement à la portion terminale haute 206A ou basse 206B du câble 202 correspondant. La gorge 252 est configurée pour recevoir le doigt de guidage 226 du couteau de connexion 220 reçu dans ce logement 244, de manière qu'une liaison cinématique de couteau de connexion 220 par rapport au boitier de connexion est une liaison pivot glissant le long d'un axe porté par un fond de la gorge 252.

Selon une alternative non représentée, la paroi arrière 250 ménage un creux, qui est configurée pour recevoir le doigt de guidage 226, de manière qu'une liaison cinématique du couteau de connexion 220 par rapport au boitier de connexion 230 est une liaison rotule centrée sur un fond du creux.

Les mouvements de translation de chaque couteau de connexion 220 par rapport au boitier de connexion 230 parallèlement aux câbles 202 étant en outre empêchés, de manière schématique le mouvement résultant de chaque couteau de connexion 220 par rapport au boitier de connexion 230 est une combinaison de deux mouvements de rotation, autours de deux axes de rotation passant par le doigt de guidage, le premier axe de rotation étant parallèle aux câbles et le deuxième axe étant orthogonal au plan terminal P210.

Ainsi, lors de la connexion du dispositif d'interconnexion 200 sur le bornier 160, chaque portion de connexion 224 est inséré dans le terminal d'entrée 164 correspondant, chaque couteau de connexion 220 étant mobile, avec une amplitude limitée, pour accommoder les écarts d'alignement entre les terminaux d'entrée 164 et les couteaux de connexion 220.

Comme illustré à la figure 9 b, chaque lumière 237 est prolongée, vers l'arrière du boitier de connexion 230, par un canal 254 qui est configuré pour laisser passer la portion de connexion 224 lors de l'assemblage du dispositif d'interconnexion 200.

Chaque canal 254 comprend des ergots, qui sont ménagés en saillie vers l'intérieur du canal 254 et qui ménagent une portion resserrée 256 du canal 254. Ces ergots, et par extension la portion resserrée 256, sont déformables élastiquement de manière à accommoder le passage de la portion de connexion 224 au travers du canal 254 vers la lumière 237, selon un mouvement de translation orienté vers l'avant de la portion avant 232, et à empêcher les mouvements de la portion de connexion vers l'arrière, au travers du canal 254, lorsque la portion de connexion 224 traverse la lumière 237. Chaque portion resserrée 237 forme ainsi un organe anti-retour, qui maintient la portion de connexion 224 dans la lumière 237 correspondante.

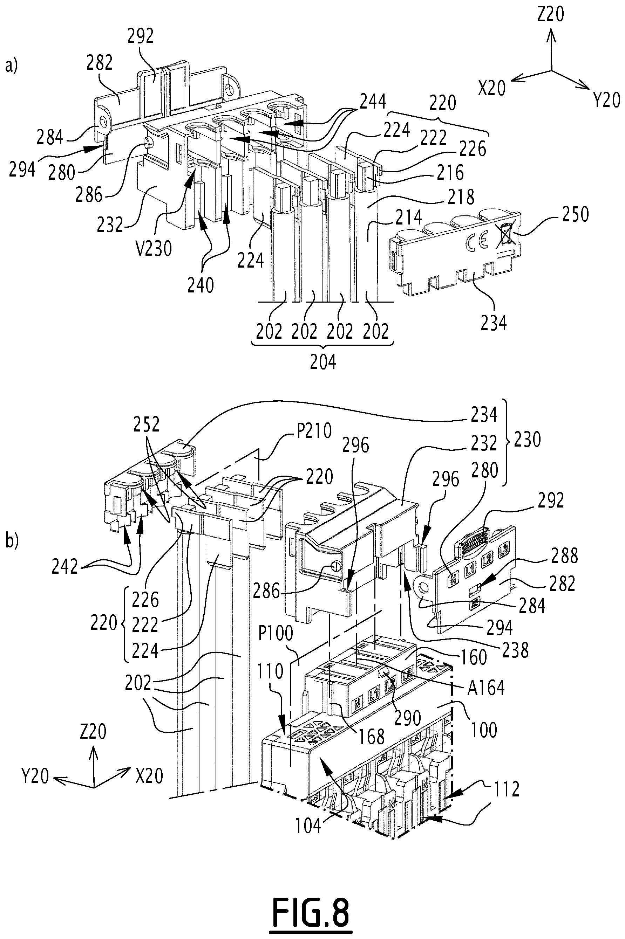

On décrit à présent la paroi mobile 280, notamment à l'aide des figures 8 à 10.

Chaque boitier de connexion 230 comprend donc une paroi mobile 280 respective. Dans l'exemple illustré, la paroi mobile 280 comprend une portion principale 282 de forme rectangulaire aplatie, qui s'étend dans un plan parallèle au plan de connexion P210. La portion principale 282 - et par extension la paroi mobile 280 - est situé du même côté du plan de connexion P210 que les portions de connexion 224. La paroi mobile 280 est donc orientée vers un utilisateur lorsque le boitier de connexion 230 est en configuration de branchement sur le bornier 160 correspondant, autrement dit la paroi mobile 280 est orientée vers l'avant du boitier de connexion 230. Par extension, la paroi mobile 280 forme une paroi avant du boitier de connexion 230.

La portion principale 282 est ici une pièce distincte de la portion avant 232, qui est assemblée à la portion avant 232. À cet effet, la paroi mobile 280 comprend ici deux pattes de fixation 284, dans lesquelles sont ménagés des orifices coopérant avec des protubérances 286 ménagées sur la portion avant 282, de manière que la paroi mobile 280 est montée basculante par rapport au reste du boitier de connexion 230, autour d'un axe de bascule A280 qui est parallèle à l'axe transverse X210. Les pattes de fixation 284 et les protubérances 286 sont un exemple d'organes d'assemblage formant une charnière entre la paroi mobile 280 et le reste du boitier de connexion 230.

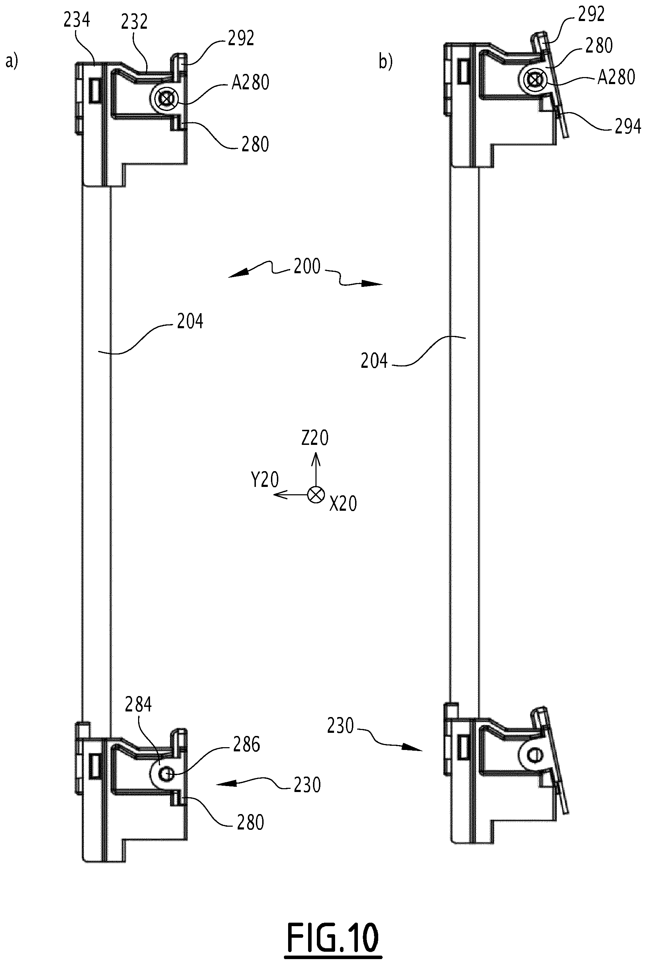

La paroi mobile 280 est déplaçable par un utilisateur, à la main et sans outil, par rapport au reste du boitier de connexion 230 entre une position verrouillée, comme illustré à l'insert a) de la figure 10, et une position déverrouillée, comme illustré à l'insert b) de la figure 10.

La paroi mobile 280 comprend une fenêtre 288, qui est ménagée en creux sur la paroi mobile 280, tandis que le bornier 160 comprend un ergot 290, qui est ménagé en saillie sur une paroi périphérique du bornier 160 correspondant.

Lorsque le boitier de connexion 230 est en configuration engagée sur le bornier 160 correspondant et que paroi mobile 280 est en position verrouillée, l'ergot 290 coopère avec la fenêtre 288, notamment par complémentarité de forme, de manière à empêcher de débrancher le boitier de connexion 230 du bornier 160.

La fenêtre 288 et l'ergot 290 sont ainsi un exemple de réalisation d'un organe de verrouillage et d'un organe de verrouillage complémentaire, qui forment ensemble un organe anti-retour, pour maintenir le boitier de connexion 230 en configuration branchée sur le bornier 160 correspondant. Cet agencement n'est pas limitatif. En alternative non représentée, l'ergot est ménagé sur la paroi mobile 280, tandis que la fenêtre 288 est ménagée sur le bornier 160. Selon une autre variante non représentée, l'ergot et la fenêtre sont remplacés par des organes de verrouillage et complémentaire présentant une autre forme. Selon une autre variante non représentée, chaque bornier 160 comprend plusieurs ergots 290, qui sont chacun reçus dans une fenêtre respective ménagée sur la paroi mobile 280.

Chaque paroi mobile 280 comprend avantageusement une zone d'appui 292, ménagée à distance de l'axe de bascule A280 et d'autre côté de l'axe de bascule A280 par rapport à l'organe de verrouillage - ici la fenêtre 288 -, de manière qu'un utilisateur puisse faire passer la paroi mobile 280 de sa position de verrouillage vers sa position de déverrouillage en appuyant sur la zone d'appui 292.

Dans l'exemple illustré, l'utilisateur fait passer la paroi mobile 280 du dispositif d'interconnexion 200 de sa position de déverrouillage vers sa position de verrouillage simplement en appuyant sur la paroi mobile 280 du côté opposé de la zone d'appui 292 par rapport à l'axe de bascule A280.

Avantageusement, le boitier de connexion comprend aussi un organe d'indexage, configuré pour maintenir la paroi mobile 280 en position de verrouillage lorsque la paroi mobile 280 est en position de verrouillage, et pour maintenir la paroi mobile 280 en position de déverrouillage lorsque la paroi mobile 280 est en position de déverrouillage. Dans l'exemple illustré, l'organe d'indexage est réalisé par des excroissances 294, qui sont ménagées sur la paroi mobile 128 et qui coopèrent, notamment par complémentarité de forme, avec des rainures complémentaires 296 ménagés dans la portion avant 232 du boitier de connexion 230. Lorsque la paroi mobile 280 est en position de verrouillage, chaque excroissance 294 est reçue dans une rainure complémentaire 296 respective.

Lorsque l'utilisateur exerce un effort sur la zone d'appui 292, les excroissances 294 et/ou les rainures complémentaires 296 se déforment élastiquement pour accommoder le mouvement de la paroi mobile 280 de sa position de verrouillage vers sa position de déverrouillage. Les excroissances 294 et/ou les rainures complémentaires 296 reprennent ensuite leur forme initiale par retour élastique. Symétriquement, lorsque la paroi mobile 280 est dans sa position de déverrouillage, l'utilisateur doit déformer les excroissances 294 et/ou les rainures complémentaires 296 pour faire passer la paroi mobile 280 dans sa position de verrouillage. L'organe d'indexage permet de réduire les risques de débranchement intempestif du dispositif d'interconnexion 200 aux borniers 160 correspondant. L'organe d'indexage est ainsi dit « bistable ».

Avantageusement, l'organe d'indexage est configuré pour générer un bruit de cliquet, autrement dit un « clic », lorsque les excroissances 294 et/ou les rainures complémentaires 296 reprennent leur forme initiale par retour élastique. Lors du branchement, ce bruit de cliquet informe l'utilisateur que la paroi mobile 280 est bien dans sa position de verrouillage, ce qui apporte à l'utilisateur une sécurité supplémentaire.

Le dispositif d'interconnexion 200 comprend un deux boitiers de connexion 230, qui sont respectivement agencés à chacune des zones terminales haute 210A et basse 210B du jeu de conducteurs 204, des couteaux de connexion 220 étant reçus dans chacun des boitiers de connexion 230.

Le dispositif de connexion 201, quant à lui, ne comprend qu'un seul boitier de connexion 230, agencé à la zone terminale haute 210A. Les portions terminales basses 206B des câbles 202 sont ici laissées libres, par exemple pour connecter le dispositif d'interconnexion 201 à un autre appareil électrique, ici un appareil externe situé à l'extérieur de l'enceinte 22. L'appareil externe est ainsi relié aux trois phases L1, L2 et L3 ainsi qu'au neutre N de la source de puissance, par l'intermédiaire

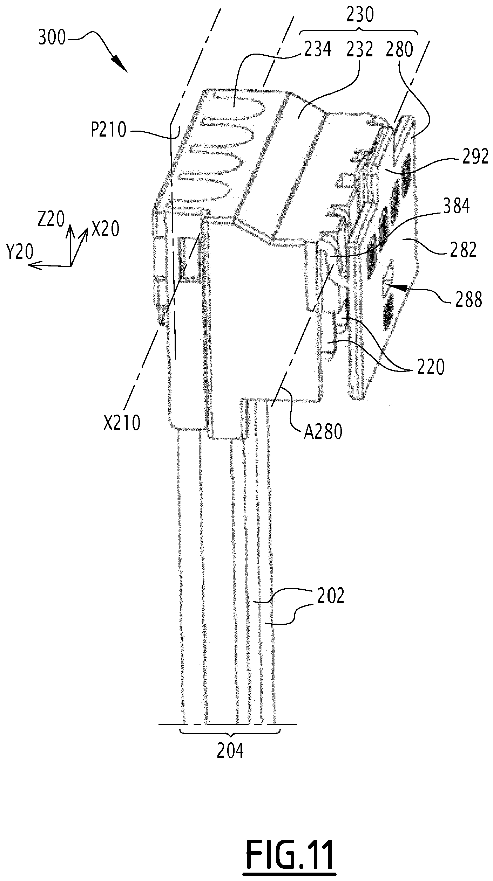

Un dispositif d'interconnexion 300, conforme à un mode de réalisation alternatif, est représenté à la figure 11. Pour chaque nouveau mode de réalisation alternatif, on décrit ainsi principalement les différentes entre ce mode de réalisation et les modes décrits précédemment, les éléments identiques aux modes de réalisation décrits précédemment portant les mêmes références.

Une des principales différences entre le dispositif d'interconnexion 300 et le dispositif d'interconnexion 200 est que la paroi mobile 280 du dispositif d'interconnexion 300 est reliée au reste du boitier de connexion 230 par un élément élastique 384, qui présente ici une forme de « S » et qui est réalisé d'une seule pièce avec la paroi mobile 280. L'élément élastique 384 forme ainsi une charnière, qui est configurée pour que la paroi mobile 280 soit basculante par rapport au reste du boitier de connexion 230 autour de l'axe de bascule A280. De manière schématique, on considère que l'axe de bascule A280 est parallèle à l'axe transverse A210 et passe par le milieu du « S ».

Dans l'exemple illustré, la paroi mobile 280, l'élément élastique 384 et le boitier avant 232 sont réalisés d'une seule pièce. L'élément élastique 384 est configuré pour rappeler, par retour élastique, la paroi mobile 280 de sa position de déverrouillage vers sa position de verrouillage.

Ainsi, lors du branchement du boitier de connexion 230 sur le bornier 160 associé, l'ergot 290 repousse la paroi mobile 280, déformant l'élément élastique 384 pour accommoder le passage de l'ergot 290. Lorsque l'ergot 290 est aligné avec la fenêtre 288, la paroi mobile 280 reprend sa position de verrouillage par retour élastique de l'élément élastique 384, verrouillant le boitier de connexion 230 sur le bornier 160 associé de manière automatique, sans nécessiter d'organe d'indexage.

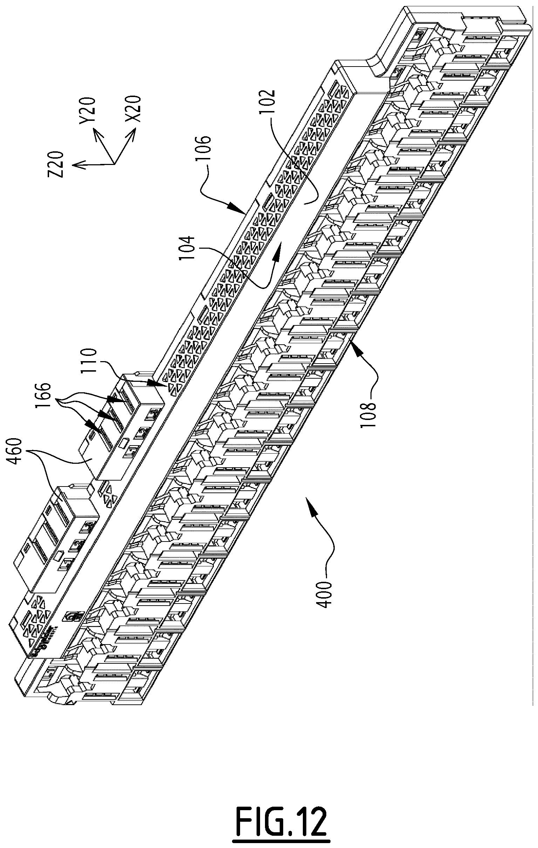

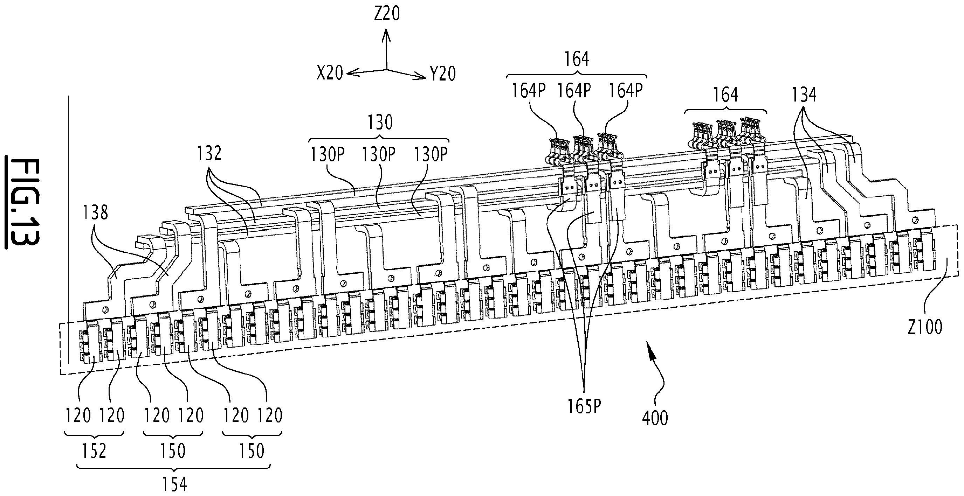

Un dispositif de distribution 400 conforme à un mode de réalisation alternatif est représenté sur les figures 12 et 13. Une des principales différences entre le dispositif de distribution 400 et le dispositif de distribution 100 est que le dispositif de distribution 400 ne comprend pas de bus neutre. Autrement dit, le bus neutre est absent.

Pour simplifier, un dispositif triphasé comprenant aussi le neutre est dit « dispositif 3PN », tandis qu'un dispositif triphasé ne comprenant pas le neutre est dit « dispositif 3P ». Ainsi le dispositif de distribution 400 est un dispositif de distribution 3P, tandis que le dispositif de distribution 100 est un dispositif 3PN. De même, le dispositif d'interconnexion 200 est un dispositif d'interconnexion 3PN.

Pour chaque paire 150 de la zone de connexion Z100, les deux terminaux de connexion 120 de cette paire 150 sont connectés au même bus de phase 130P. On comprend que par rapport au dispositif de distribution 100 représenté sur la figure 5, sur la figure 13 les terminaux de connexion 120 qui étaient reliés au bus neutre 130N sont tournés sur eux-mêmes de 180°, autour d'un axe parallèle à l'axe de profondeur Y20, la patte de connexion 124 étant alors reliée au bus de phase 130P correspondant.

Le dispositif de distribution 400 comprend ici deux borniers 460, ménagés sur le côté haut du boitier 102. Le bus neutre étant absent, chaque bornier 460 ne comprend que trois fentes de connexion 166, permettant l'accès à chacun des terminaux de phase 164P reliés aux bus de phase 130P correspondants. Le bornier 460 est donc un bornier 3P.

De manière générale, les borniers d'un dispositif de distribution 3P sont nécessairement des borniers 3P, et réciproquement. De même, les borniers d'un dispositif de distribution 3PN sont nécessairement des borniers 3PN, et réciproquement. Par analogie, un boitier de connexion appartenant à un dispositif d'interconnexion 3PN est nécessairement un boitier de connexion 3PN, tandis qu'un un boitier de connexion appartenant à un dispositif d'interconnexion 3P est nécessairement un boitier de connexion 3P.

La quatrième fente de connexion du bornier 460 étant obturée, certaines erreurs de branchement sont empêchées. Ainsi, on comprend que le dispositif d'interconnexion 200, prévu pour être connecté au bornier 160 comprenant quatre terminaux d'entrée 164, ne peut être connecté au bornier 460 ne comprenant que trois terminaux d'entrée 164.

De manière générale, on comprend qu'il n'est pas possible de brancher un boitier de connexion 3PN sur un bornier 3P.

Symétriquement, pour empêcher le branchement d'un dispositif d'interconnexion 3P sur un bornier 3PN - du type du bornier 160 -, chaque boitier de connexion 230 comprend des organes de détrompage, configurés pour coopérer avec des organes de détrompage complémentaires ménagés sur le bornier correspondant.

Dans l'exemple illustré, les organes de détrompage sont combinés avec les organes de guidage 238 - ici des rainures - et avec les organes de guidage complémentaire 168 - ici des languettes - ménagés sur le bornier.

Par exemple, le bornier 160 de type 3PN comprend deux languette 168, tandis que le boitier de connexion 230 du dispositif d'interconnexion 200 - lui aussi de type 3PN - comprend deux rainures 238, rendant possible le branchement. A contrario, un boitier de connexion de type 3P ne prévoit qu'une seule rainure 238, rendant impossible le branchement.

Même en l'absence du bus neutre, le boitier 102 du dispositif de distribution 400 ménage un volume de réception du bus neutre. Ainsi les mêmes outils de production sont utilisés pour la fabrication du boitier 102, que le dispositif de distribution 100 ou 400 comprenne un bus neutre ou non. On préserve ainsi la compatibilité avec les autres éléments du tableau électrique 20, notamment le montage sur le contre rail 34 ou la connexion avec les appareils électriques 40.

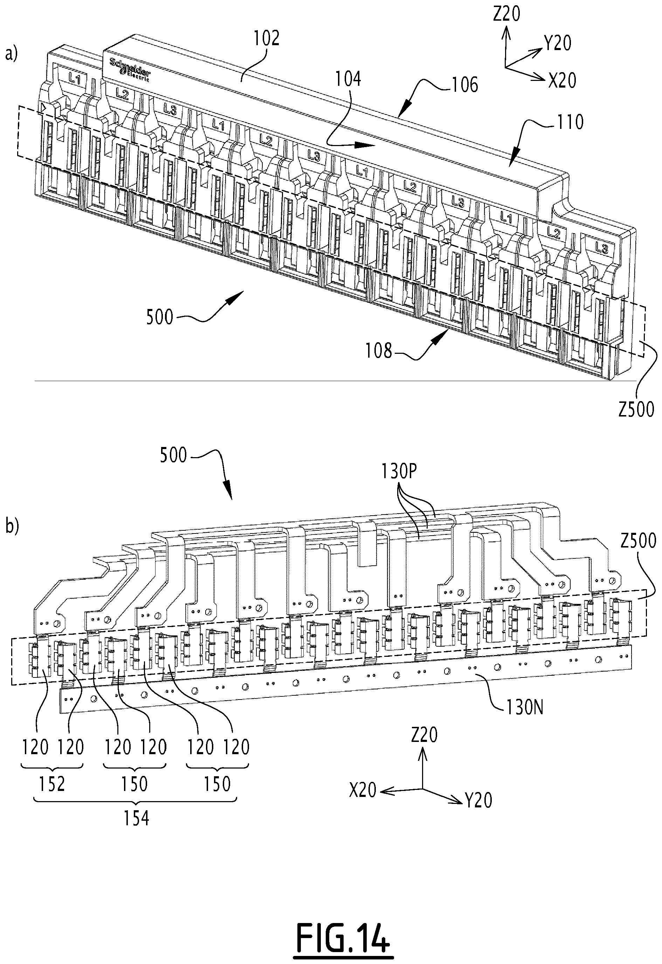

Un dispositif de distribution 500 conforme à un mode de réalisation alternatif est représenté sur la figure 14.

Une des principales différences du dispositif de distribution 500 avec le dispositif de distribution 100 est que le dispositif de distribution 500 ne comprend aucun bornier. La liaison électrique entre les éléments conducteurs 130 logés à l'intérieur du boitier 102 et la source de puissance se fait par l'intermédiaire d'un appareil électrique monté sur ce dispositif de distribution 500, par exemple par l'intermédiaire d'un disjoncteur différentiel du type du premier appareil 41.

Une autre différence est que les bus de phase 130P sont réalisés d'une seule pièce, par exemple par découpage et pliage d'une plaque de métal. Pour chaque bus de phase 130P, la portion principale 132 et les bus transverses 134 sont donc réalisés d'une seule pièce. La fabrication des bus de phase 130P est simplifiée par rapport aux bus de phase 130 des dispositifs de distribution 100 ou 400 décrits précédemment, mais les chutes de matériau sont plus importantes.

Une autre différence est que le dispositif de distribution 500 comprend une zone de connexion Z500 incluant douze paires 150 de terminaux de connexion 120, contre dix-huit paires 150 pour les dispositifs de distribution 100 ou 400 décrits précédemment. La zone de connexion Z500 respecte bien entendu les mêmes arrangements que précédemment, à savoir qu'une paire d'extrémité 152 et les deux paires 150 consécutives forment ensemble le motif 154, qui inclue donc six terminaux de connexion 120 et qui est répété le long de la zone de connexion Z500.

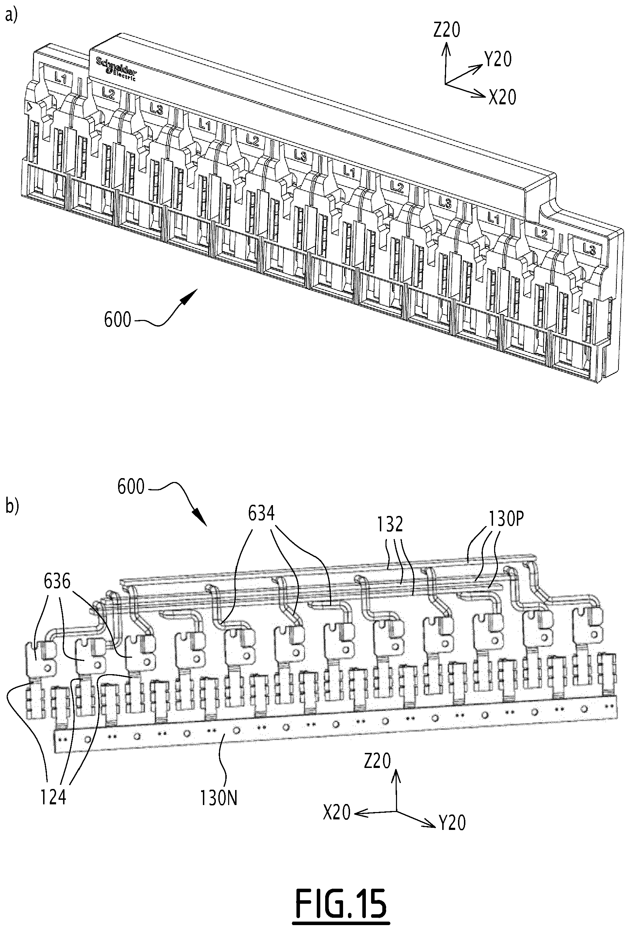

Un dispositif de distribution 600 conforme à un mode de réalisation alternatif est représenté sur la figure 15.

Une des principales différences avec les dispositifs de distribution décrits précédemment est que la portion principale 132 de chaque bus de phase 130P est relié aux terminaux de connexion 120 correspondants par des bus transverses 634 réalisés en fils émaillés. La portion de connexion 124 de chaque terminal de connexion 120 est ainsi relié à une plaquette 636, laquelle est reliée aux bus transverse.

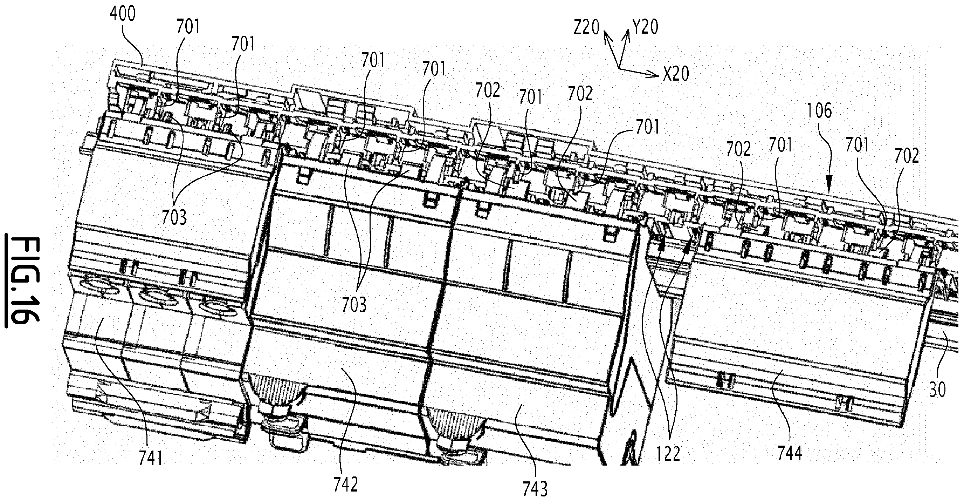

La figure 16 illustre des configurations de connexion entre le dispositif de distribution 400 décrit précédemment et des boitiers d'appareils électriques de divers types et représentés partiellement. Le dispositif de distribution 400 ne comprend pas de bus neutre et est donc un « dispositif 3P ».

De gauche à droite, les boitiers d'appareils électriques incluent un premier boitier 741, un deuxième boitier 742, un troisième boitier 743 et un quatrième boitier 744.

Le premier boitier 741 appartient ici à un disjoncteur de puissance de type 3P, c'est-à-dire un disjoncteur configuré pour être relié aux trois phases de la source de puissance, mais pas au neutre. Le premier boitier 741 occupe ainsi, sur la zone de connexion Z100, trois paires 150 consécutives.

Le deuxième boitier 742 appartient ici à un disjoncteur différentiel de type 3P, c'est-à-dire configuré pour être relié aux trois phases de la source de puissance, mais pas au neutre. Le deuxième boitier 742 occupe ainsi, sur la zone de connexion Z100, trois paires 150 consécutives.

Le troisième boitier 743 appartient ici à un disjoncteur différentiel de type 3PN, configuré pour être relié à la fois aux trois phases et au neutre de la source de puissance. Le troisième boitier 743 est par exemple un boitier du premier appareil électrique 41 décrit précédemment. Le troisième boitier 743 occupe ainsi, sur la zone de connexion Z100, trois paires 150 consécutives.

Le quatrième boitier 744 appartient ici à un disjoncteur de puissance de type 3PN, configuré pour être relié à la fois aux trois phases et au neutre de la source de puissance. Le quatrième boitier 744 est par exemple un boitier du deuxième appareil électrique 42 évoqué précédemment. Le quatrième boitier 742 occupe ainsi, sur la zone de connexion Z100, quatre paires 150 consécutives.

Le dispositif de distribution 400 comprend des butés 701, qui sont ménagées en saillie sur le boitier 102 au-dessus de chaque paire 150, tandis que le troisième boitier 743 et le quatrième boitier 744 - de type 3PN - comprennent des languettes 702, qui sont agencées de manière à interférer avec les butées 701. Sur la figure 16, les butées 701 et les languettes 702 sont représentées superposées, ce qui illustre l'interférence mécanique de ces éléments. Les troisième et quatrième boitiers 743 et 744 sont représentés en configuration de connexion sur le dispositif de distribution 400, mais dans la réalité cette connexion est impossible.

Les premier boitier 741 et le deuxième boitier 742 comprennent des languettes 704, qui sont agencées de manière à ne pas interférer avec les butées 701. Ainsi, la connexion du premier boitier 741 et le deuxième boitier 742, chacun de type 3P, au dispositif de distribution 400, lui aussi de type 3P, est possible.

Les butées 701 sont un exemple de réalisation d'un organe de détrompage, tandis que les languettes 702 sont un exemple de réalisation d'un détrompeur complémentaire, configuré pour coopérer avec les butées 701, de manière à empêcher le montage d'un appareil électrique configuré pour être connecté au bus neutre - autrement dit de type 3PN - lorsque le dispositif de distribution ne comprend pas de bus neutre - autrement dit de type 3P -.

D'autres types et agencements d'organe de détrompage et de détrompeur complémentaires sont bien entendu possibles.

Symétriquement, selon une variante non représentée, des butées de détrompage sont ménagées sur les dispositifs de distribution de type 3PN, tel que le dispositif de distribution 100, ces butées de détrompage étant agencées pour interférer avec les languettes 703 des premier et deuxième boitiers 741 et 742, autrement dit pour empêcher le montage d'appareils de type 3P sur un dispositif de distribution de type 3PN, sans pour autant empêcher le montage des troisième et quatrième boitiers 743 et 744, autrement dit pour autoriser le montage d'appareils de type 3P sur un dispositif de distribution de type 3PN.

Les modes de réalisation et les variantes mentionnées ci-dessus peuvent être combinés entre eux pour générer de nouveaux modes de réalisation de l'invention.

Au vu de ce qui précède, on comprend que chaque boitier de connexion 230, équipé de la paroi mobile 280, peut être sécurisé dans sa configuration de branchement au bornier 160 associé.

Selon un des modes de réalisation la fenêtre 288 est ménagée en creux sur la paroi mobile, tandis que l'ergot 290 est ménagé sur une paroi périphérique du bornier 160 correspondant. Avantageusement, lorsque la paroi mobile 280 est en position de verrouillage et que le boitier de connexion 230 est en configuration de branchement, l'ergot est visible au travers de la paroi, donnant à l'utilisateur une confirmation visuelle de la sécurisation du branchement.

## Revendications

1. Dispositif d'interconnexion (200 ; 201 ; 300), configuré pour être connecté électriquement à un premier bornier (160) d'un dispositif de distribution (100), dans lequel :
- le dispositif de distribution (100) est configuré :
• pour être monté sur un rail de fixation (30) d'un tableau électrique (20) et
• pour relier une source de puissance électrique à un appareil électrique (40) modulaire fixé au rail de fixation (30), la source de puissance électrique comprenant au moins une phase et optionnellement un neutre,
- le dispositif de distribution (100) comprend :
• un boitier (102), réalisé en un matériau électriquement isolant et présentant sensiblement une forme de parallélépipède à la fois allongé, s'étendant selon un axe longitudinal (X20), et aplati, s'étendant selon un plan moyen (P100) qui est parallèle à l'axe longitudinal (X20), parallèle à un axe de hauteur Z20) et orthogonal à un axe de profondeur (Y20), le dispositif de distribution (100) présentant une face avant (104) et une face arrière (106), qui sont opposées et parallèles au plan moyen (P100), un côté bas (108), parallèle à l'axe longitudinal (X20) et qui ménage un organe d'alignement (109) prévu pour le montage sur le rail de fixation (30), et un côté haut (110), opposé au côté bas (108) et relié au côté bas (108) par la face avant (104) et par la face arrière (106),
• plusieurs bus conducteurs (130), qui sont reçus dans le boitier (102) en étant électriquement isolés les uns des autres, chaque bus conducteur (130) étant configuré pour être connecté, respectivement, à une phase de la source de puissance ou optionnellement à un neutre de la source de puissance, les bus conducteurs (130) incluant, pour chaque phase de la source de puissance, un bus de phase (130P) connecté à cette phase et, le cas échéant, un bus neutre (130N) associé au neutre de la source de puissance,
• des terminaux de connexion (120), qui sont reçus dans le boitier et qui sont chacun connectés à un bus conducteur (130) respectif, chaque terminal de connexion (120) étant configuré pour être électriquement connecté à un terminal complémentaire (44) respectif de l'appareil électrique modulaire,
• le bornier (160), qui est arrangé en saillie sur le côté haut (110) du boitier (102), chaque bornier comprenant des terminaux d'entrée (164) qui sont chacun associés à un bus conducteur (130) respectif et qui sont chacun propres à être connectés à un couteau de connexion (220) respectif appartenant au dispositif d'interconnexion (200 ; 201 ; 300),
- le dispositif d'interconnexion comprend plusieurs câbles (202), qui forment ensemble un jeu de conducteurs (204), chaque câble étant associé à un bus conducteur (130) respectif, chaque câble (202) comprenant une portion terminale haute (206A), qui se termine par une première extrémité, une portion terminale basse (206B), opposée à la portion terminale haute et se terminant par une deuxième extrémité, la portion terminale haute et la portion terminale basse étant séparée par une portion intermédiaire (206C),
- les portions terminales hautes (206A) et basses (206B) de chaque câble (202) forment ensemble, respectivement, une zone terminale haute (210A) et une zone terminale basse (210B) du jeu de conducteurs (204),
- pour la zone terminale haute du jeu de conducteurs et, optionnellement, pour la zone terminale basse du jeu de conducteurs, le dispositif d'interconnexion comprend :
• des couteaux de connexion (220), qui sont chacun fixés à une extrémité respective d'un câble (202) respectif, les couteaux de connexion étant chacun configurés pour être connecté à un terminal d'entrée (164) respectif, et
• un boitier de connexion (230), qui est réalisé en un matériau isolant, qui ménage un volume interne (V230) recevant l'extrémité correspondante de chaque câble et une partie de chaque couteau de connexion (220) correspondant, chaque boitier de connexion étant configuré pour coopérer avec un exemplaire respectif du bornier (160) dans une configuration de branchement du boitier de connexion, dans laquelle chaque couteau de connexion associé à ce boitier de connexion est connecté à un terminal d'entrée respectif du bornier correspondant,
**caractérisé en ce que** :
- chaque boitier de connexion (230) comprend une paroi mobile (280), qui est montée basculante par rapport au reste du boitier de connexion et qui est déplaçable par un utilisateur, à la main et sans outil, par rapport au reste du boitier de connexion entre une position verrouillée et une position déverrouillée,
- la paroi mobile comprend un organe de verrouillage, qui est configuré pour coopérer avec un organe complémentaire ménagé sur le bornier (160) correspondant, formant un dispositif anti-retour lorsque le boitier de connexion est en configuration de branchement, de manière que :
• lorsque la paroi mobile est en position de verrouillage, l'organe anti-retour empêche de débrancher le boitier de connexion du bornier,
• lorsque la paroi mobile est en position de déverrouillage, l'organe anti-retour n'empêche pas de débrancher le boitier de connexion du bornier.

2. Dispositif d'interconnexion (200 ; 201 ; 300) selon la revendication précédente, dans lequel l'organe de verrouillage et l'organe complémentaire sont choisis parmi un ergot (290) et un volume de réception de cet ergot.

3. Dispositif d'interconnexion (200 ; 201 ; 300) selon la revendication précédente, dans lequel l'organe de verrouillage est une fenêtre (288), qui est ménagée en creux sur la paroi mobile (280), tandis que l'ergot (290) est ménagé en saillie sur une paroi périphérique du bornier (160) correspondant.

4. Dispositif d'interconnexion (200 ; 201 ; 300) selon l'une quelconque des revendications précédentes, dans lequel, pour chaque boitier de connexion (230) :
- la paroi mobile (280) est une paroi avant du boitier de connexion, qui est orientée vers un utilisateur lorsque le boitier de connexion est en configuration de branchement sur le bornier (160) correspondant, la paroi mobile étant montée basculante autour d'un axe de bascule (A280) parallèle à un axe transverse (X210) du boitier de connexion,
- l'organe de verrouillage est ménagé sur une portion basse, par rapport à l'axe de bascule, de la paroi mobile, et
- la paroi mobile comprend une zone d'appui (292), ménagée à distance de l'axe de bascule et d'autre côté de l'axe de bascule par rapport à l'organe de verrouillage, de manière qu'un utilisateur puisse faire passer la paroi mobile de sa position de verrouillage vers sa position de déverrouillage en appuyant sur la zone d'appui.

5. Dispositif d'interconnexion (300) selon l'une quelconque des revendications 1 à 4, dans lequel, pour chaque boitier de connexion (230) :
- la paroi mobile (280) est reliée au reste du boitier de connexion par un élément élastique (384), qui est réalisé d'une seule pièce avec la paroi mobile et qui tend à rappeler, par rappel élastique, la paroi mobile de sa position de déverrouillage vers sa position de verrouillage.

6. Dispositif d'interconnexion (200 ; 201) selon l'une quelconque des revendications 1 à 4, dans lequel :
- chaque paroi mobile (280) est assemblée au reste du boitier de connexion (230) correspondant par des organes d'assemblage (284, 286) formant charnière,
- chaque boitier de connexion comprend un organe d'indexage (294, 296), configuré pour maintenir la paroi mobile (280) en position de verrouillage lorsque la paroi mobile est en position de verrouillage, et pour maintenir la paroi mobile en position de déverrouillage lorsque la paroi mobile est en position de déverrouillage.

7. Dispositif d'interconnexion (200) selon l'une quelconque des revendications précédentes, dans lequel :
- le dispositif d'interconnexion (200) comprend un deuxième boitier de connexion (230), les deux boitiers de connexion étant chacun réalisés en un matériau isolant et ménageant chacun un volume interne (V230) recevant respectivement la zone terminale haute (21 0A) du jeu de conducteurs (204) et la zone terminale basse (210B) du jeu de conducteurs,
- les portions terminales haute (206A) et basse (206B) de chaque câble (202) sont chacune connectées à un couteau de connexion (220) respectif, chaque couteau de connexion comprenant une portion de connexion (224) qui s'étend vers la direction basse et dépasse d'une face basse (236) du boitier de connexion (230) correspondant,
- les deux boitiers de connexion sont configurés pour être chacun assemblés en configuration branchée à un bornier (160) respectif, les deux borniers appartenant à deux dispositifs de distribution (100) différents,
- chaque boitier de connexion comprend une paroi mobile (280), qui est montée basculante par rapport au reste du boitier de connexion et qui est déplaçable, par un utilisateur à la main et sans outil, entre une position verrouillée et une position déverrouillée,
- la paroi mobile comprend un organe de verrouillage, qui est configuré pour coopérer avec un organe complémentaire ménagé sur le bornier correspondant, formant un dispositif anti-retour lorsque le boitier de connexion est branché à ce bornier, de manière que :
• lorsque la paroi mobile est en position de verrouillage, l'organe anti-retour empêche de débrancher le boitier de connexion du bornier correspondant,
• lorsque la paroi mobile est en position de déverrouillage, l'organe anti-retour n'empêche pas de débrancher le boitier de connexion du bornier correspondant.

8. Tableau électrique (20), comprenant :
- un premier rail de fixation (30A. 30B) monté dans un volume interne (V20) du tableau électrique,
- un premier dispositif de distribution (100), qui est monté sur le premier rail de fixation et qui comprend un premier bornier (160),
- un dispositif d'interconnexion (200 ; 201) conforme à l'une quelconque des revendications 1 à 7, le boitier de connexion (230) du dispositif d'interconnexion étant branché sur le premier bornier,
dans lequel :
- le dispositif de distribution (100) est configuré pour relier une source de puissance électrique à un appareil électrique modulaire (40, 41, 42, 43) fixé au rail de fixation, la source de puissance comprenant au moins une phase et optionnellement un neutre,
- le dispositif de distribution (100) comprend :
• un boitier (102), réalisé en un matériau électriquement isolant et présentant sensiblement une forme de parallélépipède à la fois allongé, s'étendant selon un axe longitudinal (X20), et aplati, s'étendant selon un plan moyen (P100) qui est parallèle à l'axe longitudinal (X20), parallèle à un axe de hauteur Z20) et orthogonal à un axe de profondeur (Y20), le dispositif de distribution (100) présentant une face avant (104) et une face arrière (106), qui sont opposées et parallèles au plan moyen (P100), un côté bas (108), parallèle à l'axe longitudinal (X20) et qui ménage un organe d'alignement (109) prévu pour le montage sur le rail de fixation (30), et un côté haut (110), opposé au côté bas (108) et relié au côté bas (108) par la face avant (104) et par la face arrière (106),
• plusieurs bus conducteurs (130), qui sont reçus dans le boitier (102) en étant électriquement isolés les uns des autres, chaque bus conducteur (130) étant configuré pour être connecté, respectivement, à une phase de la source de puissance ou optionnellement à un neutre de la source de puissance, les bus conducteurs (130) incluant, pour chaque phase de la source de puissance, un bus de phase (130P) connecté à cette phase et, le cas échéant, un bus neutre (130N) associé au neutre de la source de puissance,
• des terminaux de connexion (120), qui sont chacun connectés à un bus conducteur (130) respectif, qui sont chacun accessibles depuis la face avant (104) et qui sont configurés pour être électriquement connecté à un terminal complémentaire (44) respectif de l'appareil électrique modulaire (40),
• le premier bornier (160), qui est ménagé sur le côté haut (110) du boitier et comprenant des terminaux d'entrée (164), qui sont chacun reliés à un bus conducteur (130) respectif, chaque terminal d'entrée définit un volume de connexion, qui s'étend selon un plan de connexion orthogonal à l'axe longitudinal (X20) et débouche vers le haut.

9. Tableau électrique (20) selon la revendication précédente, comprenant :
- un deuxième rail de fixation (30C), monté dans le volume interne (V20) parallèlement au premier rail de fixation (30A) et agencé sous le premier rail de fixation (30A),
- un deuxième dispositif de distribution (100), qui est monté sur le deuxième rail de fixation et qui comprend un deuxième bornier (160) agencé sur un côté haut (110) du deuxième dispositif de distribution,
dans lequel :
- le dispositif d'interconnexion (200) est conforme à la revendication 7, et
- le boitier de connexion (230) fixé à la zone terminale haute (21 0A) du dispositif d'interconnexion étant branché sur le premier bornier et, conjointement, le boitier de connexion fixé à la zone terminale basse (210B) du dispositif d'interconnexion est branché sur le deuxième bornier.
